# EUROPEAN PATENT APPLICATION

(11) **EP 4 851 498 A1**
(43) Date of publication of application: **09.12.2026**
(21) Application number: 25749177.9
(22) Date of filing: 31.01.2025
(51) Int. Cl.: F16H 49/00, H02K 7/10

(54) **MOTIVE FORCE TRANSMISSION DEVICE**

(30) Priority: 31.01.2024 JP 2024013794
(71) Applicant: Minebea Mitsumi Inc., Kitasaku-gun, Nagano 3890293 (JP)
(72) Inventor: AIDA, Satoshi, Kitasaku-gun, Nagano 389-0293 (JP); KAMIYA, Kohei, Kitasaku-gun, Nagano 389-0293 (JP); KAKURA, Shinnosuke, Kitasaku-gun, Nagano 389-0293 (JP); TOIDA, Shogo, Kitasaku-gun, Nagano 389-0293 (JP)
(74) Representative: Winter, Brandl - Partnerschaft mbB
(86) International application number: PCT/JP2025/003323
(87) International publication number: WO 2025/164800

(57) **Abstract**

A power transmission device (100) includes: a motor (2) including a stator (21) and a rotor (22) provided to be rotatable with respect to the stator (21); and a magnetic gear device (1) with a driving force of the motor (2) being directly transmitted to the magnetic gear device (1). The magnetic gear device (1) includes at least: a first magnet (11) including a plurality of first magnetic poles (111) disposed in a circumferential direction (C); a second magnet (12) including a plurality of second magnetic poles (121) disposed in the circumferential direction (C); and a pole piece (13) located between the first magnet (11) and the second magnet (12) and magnetically coupling the first magnet (11) and the second magnet (12). At least one of the first magnet (11) and the second magnet (12) has a ring shape, and the magnetic gear device (1) is a harmonic type magnetic gear device.

## Description

### Technical Field

The present invention relates to a power transmission device.

### Background Art

Conventionally, there is known a magnetic gear device including an inner magnet including a plurality of magnets arranged in a circumferential direction, and an outer magnet including a plurality of magnets arranged in the circumferential direction, the outer magnet being disposed at a radially outer side of the inner magnet (for example, see Patent Document 1).

### Citation List

### Patent Literature

Patent Document 1: JP 2022-150601 A

### Summary of Invention

### Technical Problem

However, the technique described in Patent Document 1 has room for improvement in simplifying the structure.

The present invention has been made in view of the above, and provides a power transmission device capable of being simplified in structure.

### Solution to Problem

In order to solve the above-described problem and achieve the object, the present invention provides a power transmission device including: a motor including a stator and a rotor provided to be rotatable with respect to the stator; and a magnetic gear device with a driving force of the motor being directly transmitted to the magnetic gear device. The magnetic gear device includes at least a first magnet including a plurality of first magnetic poles disposed in a circumferential direction, a second magnet including a plurality of second magnetic poles disposed in the circumferential direction, and a pole piece located between the first magnet and the second magnet and magnetically coupling the first magnet and the second magnet. At least one of the first magnet and the second magnet has a ring shape, and the magnetic gear device is a harmonic type magnetic gear device.

With one aspect of the power transmission device according to the present invention, it is possible to simplify the structure.

### Brief Description of Drawings

FIG. 1 is a plan view of a power transmission device including a magnetic gear device according to a first embodiment.
FIG. 2 is a perspective view illustrating the magnetic gear device illustrated in FIG. 1.
FIG. 3 is a cross-sectional view of the magnetic gear device illustrated in FIG. 1.
FIG. 4 is a plan view of a power transmission device including a magnetic gear device according to a first modified example of the first embodiment.
FIG. 5 is a perspective view of a magnetic gear device according to a second modified example of the first embodiment.
FIG. 6 is a cross-sectional view of a power transmission device including a magnetic gear device according to a third modified example of the first embodiment.
FIG. 7-1 is a perspective view of the magnetic gear device illustrated in FIG. 6.
FIG. 7-2 is a plan view of a second magnetic gear mechanism included in the magnetic gear device illustrated in FIG. 6.
FIG. 8 is a cross-sectional view of a power transmission device including a magnetic gear device according to a fourth modified example of the first embodiment.
FIG. 9-1 is a perspective view of the magnetic gear device illustrated in FIG. 8.
FIG. 9-2 is a cross-sectional view of the magnetic gear device illustrated in FIG. 8, illustrating the other side in the axial direction.
FIG. 10 is a plan view of a power transmission device 100E including a magnetic gear device according to a fifth modified example of the first embodiment.
FIG. 11 is a perspective view of the magnetic gear device illustrated in FIG. 10.
FIG. 12 is a plan view of a power transmission device including a magnetic gear device according to a sixth modified example of the first embodiment.
FIG. 13 is a perspective view of the magnetic gear device illustrated in FIG. 12.
FIG. 14 is a plan view of a power transmission device including a magnetic gear device according to a second embodiment.
FIG. 15 is a plan view of a power transmission device including a magnetic gear device according to a third embodiment.
FIG. 16 is a plan view of a power transmission device including a magnetic gear device according to a fourth embodiment.
FIG. 17 is a plan view of a power transmission device including a magnetic gear device according to a fifth embodiment.
FIG. 18 is a plan view of a power transmission device including a magnetic gear device according to a sixth embodiment.

Hereinafter, power transmission devices according to embodiments will be described in detail with reference to the drawings. Note that the dimensional relationship between elements and the ratio of each element in the drawings may differ from reality. Some of the parts may be different in dimensional relationship and ratio in different drawings.

### First Embodiment

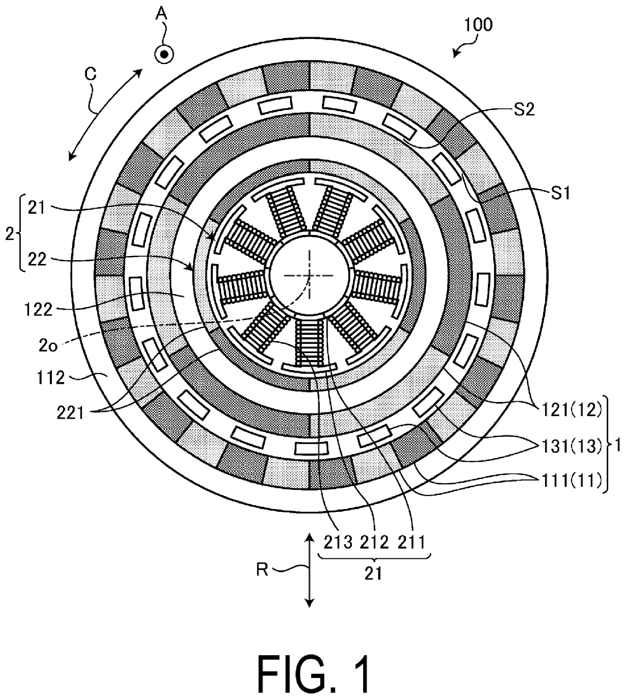

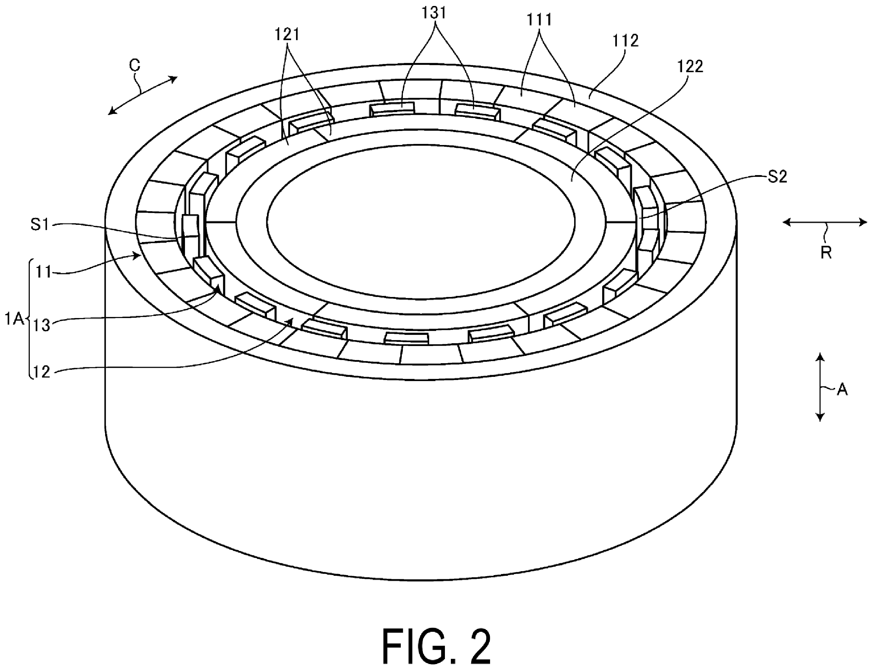

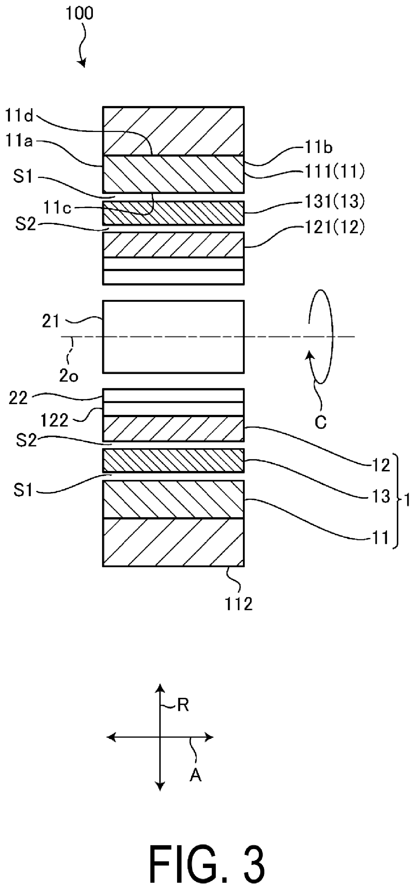

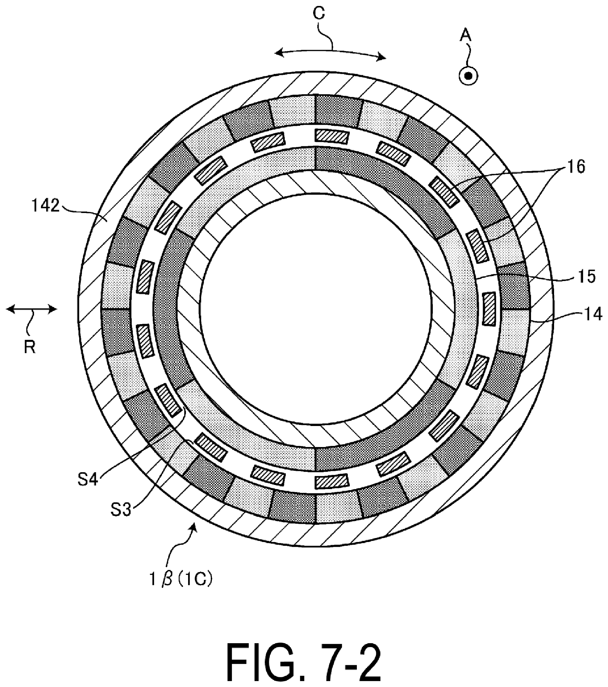

FIG. 1 is a plan view of a power transmission device 100 including a magnetic gear device 1 according to a first embodiment. FIG. 2 is a perspective view illustrating the magnetic gear device 1 illustrated in FIG. 1. FIG. 3 is a cross-sectional view of the magnetic gear device 1 illustrated in FIG. 1. For convenience of illustration, a motor 2 is omitted in FIG. 2.

In the description of the power transmission device 100 including the magnetic gear device 1 illustrated in FIGS. 1, 2, and 3 according to the embodiment, for ease of understanding directions, a direction orthogonal to the sheet surface of FIG. 1 is referred to as an axial direction A, a rotation direction of a first magnet 11 and a second magnet 12 is referred to as a circumferential direction C, and a direction included in a plane orthogonal to the axial direction A, passing through an axis 2o of a stator 21, and orthogonal to the circumferential direction C is referred to as a radial direction R.

The power transmission device (transmission) 100 illustrated in FIGS. 1, 2, and 3 according to the embodiment transmits a driving force of a motor 2 to the outside. The power transmission device 100 includes, for example, the magnetic gear device 1 and the motor 2.

The power transmission device 100 according to the first embodiment increases torque of a rotor 22 of the motor 2 as input by an output shaft (not illustrated), and outputs the increased torque. The power transmission device 100 is accommodated in, for example, a frame (not illustrated).

The motor 2 includes, for example, a stator 21 and a rotor 22 provided to be rotatable in the circumferential direction C with respect to the stator. The motor 2 is an electric motor to convert electric energy supplied from a power supply into mechanical energy (energy to rotate the rotor 22 in the circumferential direction C). The motor 2 according to the present embodiment is an outer rotor type including the rotor 22 disposed at the outer side of the stator 21 in the radial direction R.

The stator 21 is a part to generate a force for rotating the rotor 22 in the circumferential direction C. The stator 21 includes a yoke 211 formed in an annular shape, teeth 212 protruding inward in the radial direction R from an inner peripheral surface of the yoke 211, a coil 213 wound around the teeth 212, and an insulator 214 electrically insulating the teeth 212 and the coil 213 from each other.

In the stator 21 according to the present embodiment, the yoke 211 and the teeth 212 are formed by, for example, punching a flat plate-shaped member formed of a magnetic material (magnetic body) such as an electromagnetic steel plate and stacking a plurality of members in the axial direction A. That is, the yoke 211 and the teeth 212 are formed of a magnetic material (magnetic body).

The coil 213 is electrically connected to, for example, a power supply. When the motor 2 is driven, a voltage is applied from the power supply to the coil 213, a magnetic field changing with the passage of time is formed in the coil 213, and the rotor 22 rotates in the circumferential direction C with respect to the stator 21 due to the interaction between the magnetic field and the magnetic force of rotor magnets 221.

Next, the rotor 22 will be described. The rotor 22 is disposed at the outer side of the stator 21 in the radial direction R to be rotatable with respect to the stator 21. The rotor 4 includes a plurality of (three in the present embodiment) rotor magnets 221. The rotor magnets 221 have, for example, a ring shape, and have a plurality of magnetic poles (six poles in the present embodiment) integrally formed. The rotor magnets 221 are fixed to the inner peripheral surface of a second back yoke 122 of a second magnet 12, and rotates together with the second magnet 12 and the second back yoke 122. That is, in the power transmission device 100 according to the present embodiment, the magnetic gear device 1 and the motor 2 are integrated.

When the motor 2 having the above configuration is driven, the rotor 22 rotates in the circumferential direction C about an axis 2o with respect to the stator 21.

The magnetic gear device 1 includes a first magnet 11, a second magnet 12, a first pole piece 13, and a second shaft 17. The magnetic gear device 1 according to the present embodiment is a so-called flux-modulated magnetic gear (harmonic type magnetic gear device). In the magnetic gear device 1, when the second magnet 12 coupled to the driving side rotates about the axis 2o, changes in the magnetic fluxes of a plurality of second magnetic poles 121 are modulated by the first pole piece 13 and transmitted to first magnetic poles 111 of the first magnet 11 coupled to the driven side, thus rotating the first magnet 11 about the axis 2o. In the magnetic gear device 1 according to the present embodiment, the first magnet 11, the second magnet 12, and the first pole piece 13 are formed individually. The first space S1 may be filled with a non-magnetic material such as a resin sliding material as long as the first magnet 11 and the pole piece 13 are allowed to rotate in a case where the first space S1 is in a vacuum state, a case where a fluid such as air, water, or oil is present, or the like.

The first magnet 11 is provided so as to be rotatable about the axis 2o with respect to the frame and the first pole piece 13. The first magnet 11 includes a plurality of (for example, fifty two) first magnetic poles 111 disposed in the circumferential direction C, and the plurality of first magnetic poles 111 are integrally formed in a ring shape. The first magnet 11 is provided to be rotatable about the axis 2o with respect to the frame and the first pole piece 13. Moreover, a first space S1 is formed between the first magnet 11 and the first pole piece 13 in the radial direction R. In other words, the first magnet 11 is provided to be rotatable about the axis 2o in a non-contact state with respect to the first pole piece 13.

The plurality of first magnetic poles 111 are disposed such that the N poles and the S poles are alternately arranged in the circumferential direction C. The plurality of first magnetic poles 111 of the first magnet 11 are formed by magnetizing a magnetic body as described later. Since the first magnet 11 has, for example, fifty-two first magnetic poles 111, the number of pole pairs of the first magnet 11 is fourteen.

The number of the first magnetic poles 111 of the first magnet 11 is larger than the number of the second magnetic poles 121 of the second magnet 12. In addition, the first magnet 11 is provided with, for example, a first back yoke 112 provided at the inner side in the radial direction R. In the magnetic gear device 1 according to the present embodiment, the first magnet 11 and the second magnet 12 are disposed so as to be rotatable about the common axis 2o.

Here, as illustrated in FIGS. 1, 2, and 3, the first magnet 11 is formed in a ring shape, and has a downward side surface 11a and an upward side surface 11b. Further, the first magnet 11 has a through hole 11c and an outer peripheral surface 11d. The first magnet 11 is a rare-earth iron-based magnet, and in the present embodiment, is formed by, for example, mixing magnetic powder containing neodymium (Nd-Fe-B), as a magnetically isotropic rare-earth iron-based magnet, and a thermosetting resin, for example, an epoxy resin, at predetermined ratios.

The rare-earth iron-based magnet before magnetization, as the material of the first magnet 11, is preferably an anisotropic rare-earth iron-based magnet having an average grain size of 10 nm or more and 10000 nm or less, and more preferably an anisotropic rare-earth iron-based magnet having an average grain size of 10 nm or more and 6600 nm or less.

The first magnet 11 is formed by magnetizing a magnetization target, as the rare-earth iron-based magnet before magnetization described above, by increasing the temperature of the magnetization target from a temperature lower than the Curie point to the Curie point or higher and decreasing the temperature from the Curie point or higher to a temperature lower than the Curie point while the magnetization magnetic field is applied by a field magnet unit.

In addition, in a case where a permanent magnet as the magnetization target is constituted by a rare-earth magnet (for example, an Nd bond magnet) having high magnetic characteristics in response to miniaturization and high resolution of a device (for example, a magnetic encoder) of use, a conventional coil energization method including applying a pulse current requires applying a greater current, and is considered to incur a problem that a magnetizing device is increased in size and price. In contrast, the first magnet 11 described in the present embodiment is formed from a magnetization target by performing multipolar magnetization, by heating the magnetization target by a heating unit, and decreasing the temperature from a temperature equal to or higher than the Curie point of the magnetic powder constituting the magnetization target to a temperature lower than the Curie point, while continuously generating a magnetic field by the permanent magnet of the field magnet unit (for example, see JP 2021-93521 A).

By forming the first magnet 11 in this manner, it is possible to achieve the uniformity of the magnetization characteristics of the magnetization target. Moreover, by forming the first magnet 11 as described above, the pitch of the plurality of first magnetic poles 111 in the circumferential direction C (for example, equal to or less than 3 mm in the circumferential direction C) can be reduced. The pitch of the first magnetic poles 111 is measured at the outer periphery of the first magnet 11.

The second magnet 12 is provided to be rotatable about the axis 2o with respect to the frame and the first pole piece 13. Moreover, a second space S2 is formed between the second magnet 12 and the first pole piece 13 in the radial direction R. In other words, the second magnet 12 is provided to be rotatable about the axis 2o in a non-contact state with respect to the first pole piece 13. The second magnet 12 is formed similarly to the first magnet 11. That is, the second magnet 12 includes a plurality of (six) second magnetic poles 121 disposed in the circumferential direction C, and the plurality of second magnetic poles 121 are integrally formed in a ring shape. The plurality of second magnetic poles 121 are disposed such that the N poles and the S poles are alternately arranged in the circumferential direction C. Since the second magnet 12 has, for example, six second magnetic poles 121, the number of pole pairs of the second magnet 12 is three. In addition, the second magnet 12 is provided with a second back yoke 122 provided, for example, at the outer side in the radial direction R. The second space S2 may be filled with a non-magnetic material such as a resin sliding material as long as the second magnet 12 and the first pole piece 13 are allowed to rotate in a case where the second space S2 is in a vacuum state, a case where a fluid such as air, water, or oil is present, or the like.

The first pole piece 13 is constituted by a plurality of (for example, twenty nine) first modulation pieces 131, and modulates the magnetic flux of the magnets 11 and 12. The first pole piece 13 is located between the first magnet 11 and the second magnet 12 in the radial direction R, and magnetically couples the first magnet 11 and the second magnet 12. The first modulation pieces 131 are each formed of, for example, a magnetic body, are arranged at equal intervals along the circumferential direction C, and are fixed to a frame (not illustrated).

In the magnetic gear device 1 according to the present embodiment, the number 11M of pole pairs of the first magnet 11 is twenty six, the number 12M of pole pairs of the second magnet 12 is three, and the number 13M of the modulation pieces 131 of the first pole piece 13 is twenty nine. Therefore, when the second magnet 12 at the inner side in the radial direction R is used for the input, the first magnet 11 at the outer side in the radial direction R is used for the output, and the first pole piece 13 is fixed, a reduction ratio X1 can be calculated as follows.$X 1 = 11 M / 12 M = 26 / 3 = 8.67$

Alternatively, when the second magnet 12 is used for the input, the first pole piece 13 is used for the output, the first magnet 11 is fixed, and the second magnet 12 is disposed at the input side, a reduction ratio X2 can be calculated as follows.$X 2 = 13 M / 12 M = 29 / 3 = 9.67$

In the power transmission device 100 according to the present embodiment, when the motor 2 is driven, the rotor 22 rotates about the axis 2o with respect to the stator 21, and along with the rotation, the second back yoke 122 and the second magnet 12 fixed to the rotor 22 rotate in the circumferential direction C together with the rotor 22. The change in the magnetic flux of the second magnetic poles 121 of the second magnet 12 is modulated by the first pole piece 13 and transmitted to the first magnetic poles 111 of the first magnet 11 coupled to the driven side. At this time, in the magnetic gear device 1 according to the present embodiment, the number of the first magnetic poles 111 of the first magnet 11 disposed at the outer side of the second magnet 12 in the radial direction R is larger than the number of the second magnetic poles 121 of the second magnet 12, and therefore the torque can be increased although the rotation speed in the circumferential direction C is reduced. Moreover, in the magnetic gear device 1 according to the present embodiment, the first magnet 11 has a ring shape where the plurality of first magnetic poles 111 are disposed in the circumferential direction C and the plurality of first magnetic poles 111 are integrally formed. Therefore, in the magnetic gear device 1 according to the present embodiment, the pitch of the plurality of first magnetic poles 111 in the circumferential direction C can be reduced, and thus the torque can be increased, as compared with, for example, a magnetic gear device (for example, a device described in JP 2022-150601 A) including a ring-shaped first magnet formed by coupling a plurality of magnets formed individually.

The output shaft (not illustrated) is disposed, for example, at the outer side of the first back yoke 112 of the first magnet 11 in the radial direction R, and the torque of the first magnet 11 is output to the outside by a drive transmission mechanism (not illustrated). The drive transmission mechanism is constituted by, for example, a worm and a worm wheel.

In the magnetic gear device 1 according to the present embodiment, the first magnet 11 and the first pole piece 13 are not in contact with each other in the radial direction R, and the first pole piece 13 and the second magnet 12 are not in contact with each other in the radial direction R. Moreover, in the magnetic gear device 1, the first pole piece 13 is disposed between the first magnet 11 and the second magnet 12 in the radial direction R, and the first magnet 11 and the second magnet 12 are magnetically coupled to each other by the first pole piece 13. Therefore, when torque equal to or greater than the maximum transmission torque set by the magnetic force of the second magnetic poles 121 and the gap between the second magnet 12 and the first pole piece 13 in the radial direction R is applied to the magnetic gear device 1, the magnetic gear device 1 functions as a torque limiter, and the rotation of the first magnet 11 in the circumferential direction C is stopped even in a state where the second magnet 12 is rotating in the circumferential direction C. Therefore, the magnetic gear device 1 according to the present embodiment can protect the motor 2 by separating the driving side and the driven side from each other at the time of overload. Alternatively, when unintended torque is generated by the motor 2, the magnetic gear device 1 functions as a torque limiter, and can protect the load side by separating the driving side and the driven side from each other. In addition, when the magnetic gear device 1 is used in an electric opening/closing mechanism of a home electric appliance, the magnetic gear device 1 can block the torque from the driving side when a load-side member comes into contact with a human body, and thus can also serve as a safety device to minimize the effect on the human body.

As described above, the power transmission device 100 according to the present embodiment includes the motor 2 including the stator 21 and the rotor 22 provided to be rotatable with respect to the stator 21, and the magnetic gear device 1 with the driving force of the motor 2 being directly transmitted to the magnetic gear device 1. The magnetic gear device 1 includes at least the first magnet 11 including a plurality of first magnetic poles 111 disposed in the circumferential direction C, the second magnet 12 including a plurality of second magnetic poles 121 disposed in the circumferential direction C, and the pole piece 13 located between the first magnet 11 and the second magnet 12 and magnetically coupling the first magnet 11 and the second magnet 12. At least one of the first magnet and the second magnet has a ring shape, and the magnetic gear device 1 is a harmonic type magnetic gear device. Therefore, it is not necessary to form a link-shaped magnet by coupling a plurality of magnets, and thus the structure can be simplified. Moreover, the power transmission device 100 includes the motor 2 as an input-side device and the magnetic gear device 1 with a driving force of the motor 2 being indirectly transmitted to the magnetic gear device 1, and the magnetic gear device 1 is of a harmonic type. More specifically, the magnetic gear device 1 is a harmonic type magnetic gear device configured such that the plurality of first magnetic poles 111 of the first magnet 11 and the plurality of second magnetic poles 121 of the second magnet 12 are magnetically coupled to each other with the first pole piece 13 interposed in the radial direction R in a state where one of the ring-shaped first magnet 11 and the ring-shaped second magnet 12 is disposed at the outer side in the radial direction R and the other is disposed at the inner side in the radial direction R. Therefore, in the magnetic gear device 1 according to the present embodiment, the first magnetic poles 111 and the second magnetic poles 121 can be magnetically coupled to each other all around the axis 2o, and thus the torque density can be increased and the torque can be increased, as compared with a magnetic gear device (for example, JP 2011-196451 A) including the first magnet and the second magnet disposed such that a part of the outer peripheral surface of the ring-shaped first magnet and a part of the outer peripheral surface of the ring-shaped second magnet overlap each other in the axial direction.

The magnetic gear device 1 according to the present embodiment includes the ring-shaped first magnet 11 including the plurality of first magnetic poles 111 disposed in the circumferential direction C and integrally formed, the ring-shaped second magnet 12 including the plurality of second magnetic poles 121 disposed in the circumferential direction C, and the first pole piece 13 located between the first magnet 11 and the second magnet 12 and magnetically coupling the first magnet 11 and the second magnet 12.

Furthermore, the power transmission device 100 according to the present embodiment can be constituted by attaching the magnetic gear device 1 to the outer peripheral surface of the rotor magnets 221 in the radial direction, and thus the magnetic gear device 1 can be easily retrofitted to the motor 2.

Further, the rotor magnets 221 according to the present embodiment are integrally formed in a ring shape by magnetizing a magnetic body, similarly to the first magnet 11. Therefore, the rotor 22 according to the present embodiment can be easily manufactured by reducing the number of assembly operations, for example, as compared with a motor including a ring-shaped rotor magnet formed by coupling a plurality of magnets formed individually.

In the magnetic gear device 1 according to the present embodiment, the first magnet 11 includes the plurality of first magnetic poles 111 integrally formed. Therefore, the magnetic gear device can be reduced in size and weight as compared with a magnetic gear device including a first magnet formed by coupling individually formed magnets in the circumferential direction C. Moreover, since the magnetic gear device 1 includes the first magnet 11 having the above configuration, the number of components can be reduced, the shape of the back yoke 112 and/or the frame can be simplified, and it is not necessary to provide a cover for preventing the first magnetic poles 111 from falling off. In addition, in the first magnet 11, the pitch of the plurality of first magnetic poles 111 in the circumferential direction C is small, and therefore the torque ripple can be reduced. Further, in the magnetic gear device 1 according to the present embodiment, since the number of the first magnetic poles 111 of the first magnet 11 is larger than the number of the second magnetic poles 121 of the second magnet 12, the torque (torque at the output side) of the output shaft coupled to the first magnet 11 of the magnetic gear device 1 can be increased compared to the torque (torque at the input side) of the rotor 22 of the motor 2. Moreover, in the magnetic gear device 1 according to the present embodiment, the first magnet 11 and the first pole piece 13 are not in contact with each other in the radial direction R, and the first pole piece 13 and the second magnet 12 are not in contact with each other in the radial direction R, making it possible to reduce the sound generated during driving, to prevent the generation of dust due to use, and to eliminate the need to use a lubricant. In addition, since the magnetic gear device 1 does not generate dust due to use and eliminates the need to use a lubricant for the use, it is not necessary to perform maintenance.

Since the magnetic gear device 1 according to the present embodiment has the above-described functions and effects, the magnetic gear device 1 can be applied to, for example, a device used in a clean room where dust generation or the like is unfavorable, a device used under a special environment such as the ocean or the aerospace, a house facility or a home appliance requiring safety assurance upon contact with a human body or countermeasures against overload, an electric generator utilizing high efficiency, and the like. More specifically, the magnetic gear device 1 can be applied to a robot arm, a semiconductor manufacturing device, an electric opening/closing mechanism or an electronic lock of a home electric appliance, a cooling pump of an air conditioner or the like, a cooling fan, and the like.

In the magnetic gear device 1 according to the present embodiment, the plurality of first magnetic poles 111 of the first magnet 11 are integrally formed to have a ring shape, and the plurality of second magnetic poles 121 of the second magnet are integrally formed to have a ring shape. Therefore, the size and weight can be reduced as compared with a magnetic gear device including a first magnet and a second magnet formed by coupling individually formed magnets in the circumferential direction C.

In the power transmission device 100 according to the present embodiment, the second magnet 12 includes the plurality of second magnetic poles 121 integrally formed. Therefore, the magnetic gear device can be reduced in size and weight as compared with a magnetic gear device including a second magnet formed by coupling individually formed magnets in the circumferential direction C.

In the power transmission device 100 according to the present embodiment, the first pole piece 13 is located between the first magnet 11 and the second magnet 12 in the radial direction R.

In the power transmission device 100 according to the present embodiment, the second magnet 12 is disposed at the inner side of the first magnet 11 in the radial direction R. The motor 2 as an input-side device is disposed at the inner side of the second magnet 12 in the radial direction R. Furthermore, the output shaft is disposed at the outer side of the first magnet 11 in the radial direction R.

In the magnetic gear device 1 according to the above-described embodiment, the first pole piece 13 is fixed, the first magnet 11 disposed at the outer side in the radial direction R is not fixed, and the second magnet 12 disposed at the inner side in the radial direction R is not fixed and rotates together with the rotor 22. However, the magnetic gear device 1 according to the present embodiment is not limited to such a configuration. For example, as indicated in Table 1, any one of the first magnet 11, the second magnet 12, and the first pole piece 13 may be fixed, and the remaining two may be not fixed. Further, one of the first magnet 11 and the second magnet 12 may be disposed at the inner side in the radial direction R, and the other may be disposed at the outer side in the radial direction R.

### Table 1

**(Table 1)**

| | First embodiment | Another example | Another example | Another example |
|---|---|---|---|---|
| Magnet disposed at inner side in radial direction | Input side | Input side | Fixed | Output side |
| | Not fixed (fixed to rotor 22 and rotatable in circumferential direction C) | Not fixed (fixed to rotor 22 and rotatable in circumferential direction C) | | Not fixed (fixed to output shaft and rotatable in circumferential direction C) |
| Pole piece | Fixed | Output side | Output side | Fixed |
| | | Not fixed (fixed to output shaft and rotatable in circumferential direction C) | Not fixed (fixed to output shaft and rotatable in circumferential direction C) | |
| Magnet disposed at outer side in radial direction | Output side | Fixed | Input side | Input side |
| | Not fixed (fixed to output shaft and rotatable in circumferential direction C) | | Not fixed (fixed to rotor 22 and rotatable in circumferential direction C) | Not fixed (fixed to rotor 22 and rotatable in circumferential direction C) |

In the magnetic gear device 1 according to the above-described embodiment, the first magnet 11 includes fifty-two (twenty-six pole pairs of) first magnetic poles 111. However, the number of the first magnetic poles 111 of the first magnet 11 according to the present embodiment is not limited to such a number, and can be set to any number.

Further, in the magnetic gear device 1 according to the above-described embodiment, the second magnet 12 includes six (three pole pairs of) second magnetic poles 121. However, the number of the second magnetic poles 121 of the second magnet 12 according to the present embodiment is not limited to such a number, and can be set to any number.

In the magnetic gear device 1 according to the above-described embodiment, the first pole piece 13 is constituted by twenty-nine first modulation pieces 131. However, the number of the first modulation pieces 131 constituting the first pole piece 13 according to the present embodiment is not limited to such a number, and can be set to any number. When two of the number of the first magnetic poles 111 of the first magnet, the number of the second magnetic poles 121 of the second magnet, and the number of the modulation pieces 131 of the first pole piece 13 are determined to be desired numbers, the one remaining number is appropriately set according to the two other numbers.

Further, in the motor 2 according to the above-described embodiment, the rotor magnets 221 include six poles. However, the number of the magnetic poles of the rotor magnets according to the present embodiment is not limited to such a number, and can be set to any number.

In the magnetic gear device 1 according to the above-described embodiment, the second magnet 12 includes the plurality of second magnetic poles 121 disposed in the circumferential direction C, and the plurality of second magnetic poles 121 are integrally formed in a ring shape. However, the second magnet 12 according to the present embodiment can also be formed by joining a plurality of magnets each formed in an arc shape and having two second magnetic poles 121. Similarly, the first magnet 11 can also be formed by joining a plurality of magnets each having two first magnetic poles 111.

In the magnetic gear device 1 according to the above-described embodiment, the input shaft and the output shaft can be replaced with each other. In this case, the torque is reduced, while the speed can be increased. When the second magnet 12 disposed at the outer side in the radial direction R is used for the input, the first magnet 11 disposed at the inner side in the radial direction R is used for the output, and the first pole piece 13 is fixed, a reduction ratio X3 can be calculated as follows. $X 3 = 11 M / 12 M = 26 / 3 = 8.67$

Alternatively, when the first pole piece 13 is used for the output, the first magnet 11 is used for the input, and the second magnet 12 is fixed, a speed increase ratio X4 can be calculated as follows. $X 4 = 13 M / 12 M = 29 / 3 = 9.67$

In addition, for example, in the magnetic gear device 1 according to the above-described embodiment, when the first magnet 11 and the second magnet 12 are exchanged, the first magnet 11 is located at the inner side in the radial direction R, the second magnet 12 is located at the outer side in the radial direction R, the first magnet 11 side is used as the input shaft, the second magnet 12 side is used as the output shaft, and the first pole piece 13 is fixed, a speed increase ratio X5 can be calculated as follows.$X 5 = 11 M / 12 M = 26 / 3 = 8.67$

Alternatively, when the first pole piece 13 is used for the output, the first magnet 11 is fixed, and the second magnet 12 is used for the input, a reduction ratio X6 can be calculated as follows. $X 6 = 13 M / 12 M = 29 / 3 = 9.67$

### First Modified Example of First Embodiment

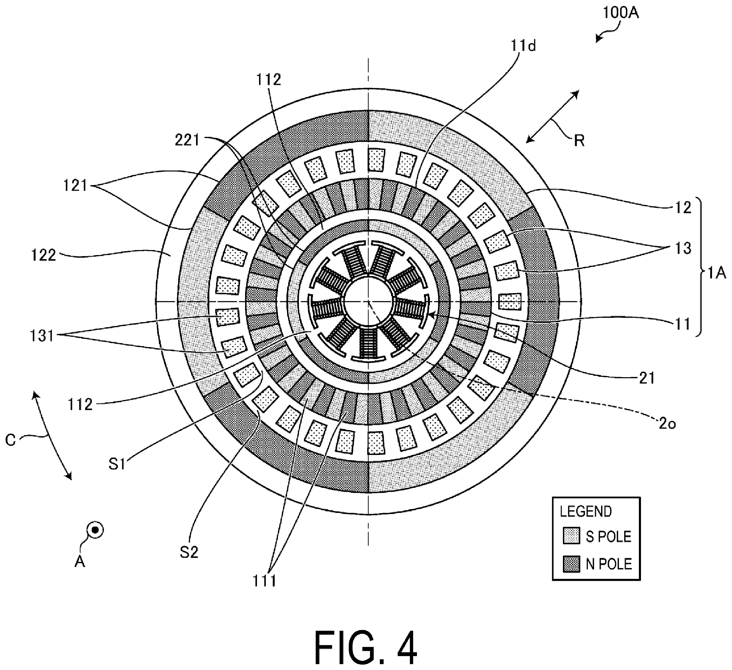

Next, a magnetic gear device 1A according to a first modified example of the first embodiment will be described with reference to FIG. 4. FIG. 4 is a plan view of a power transmission device 100A including a magnetic gear device 1A according to a first modified example of the first embodiment. Note that in the configuration of the magnetic gear device 1A according to the first modified example of the first embodiment, the same components as the components of the magnetic gear device 1 according to the first embodiment are denoted by the same reference numerals and the description of such components is omitted. The motor 2 similar to the motor 2 of the power transmission device 100 according to the first embodiment is disposed at the inner side of the magnetic gear device 1A in the radial direction R.

The magnetic gear device 1A according to the present modified example includes a first magnet 11, a second magnet 12, and a first pole piece 13.

The first magnet 11 is disposed at the inner side of the second magnet 12 in the radial direction R in the magnetic gear device 1A, and the inner peripheral surface of the first back yoke 112 is fixed to the outer peripheral surface of the rotor 22. The first magnet 11 according to the present modified example is disposed at the input side (driving side) with respect to the second magnet 12.

The second magnet 12 is disposed at the outer side of the first magnet 11 in the radial direction R in the magnetic gear device 1A, and the second back yoke 122 is fixed to the output shaft via an intermediate transmission mechanism. The second magnet 12 according to the present modified example is disposed at the output side (driven side) with respect to the first magnet 11.

In the power transmission device according to the present modified example, when the motor 2 is driven, the rotor 22 rotates about the axis 2o with respect to the stator 21, and along with the rotation, the first back yoke 112 and the first magnet 11 fixed to the rotor 22 rotate in the circumferential direction C together with the rotor 22. The change in the magnetic flux of the first magnetic poles 111 of the first magnet 11 is modulated by the first pole piece 13 and transmitted to the second magnetic poles 121 of the second magnet 12 coupled to the driven side. At this time, in the magnetic gear device 1A according to the present modified example, since the number of the second magnetic poles 121 of the second magnet 12 disposed at the outer side of the first magnet 11 in the radial direction R is smaller than the number of the first magnetic poles 111 of the first magnet 11, the rotation speed in the circumferential direction C can be increased although the torque is decreased. Moreover, in the magnetic gear device 1A according to the present modified example, the first magnet 11 has a ring shape where the plurality of first magnetic poles 111 are disposed in the circumferential direction C and the plurality of first magnetic poles 111 are integrally formed. Therefore, in the magnetic gear device 1A according to the present modified example, the pitch of the plurality of first magnetic poles 111 in the circumferential direction C can be reduced, and thus the speed can be increased, as compared with, for example, a magnetic gear device (for example, a device described in JP 2022-150601 A) including a ring-shaped first magnet formed by coupling a plurality of magnets formed individually.

As described above, in the magnetic gear device 1A according to the present modified example, the first magnet 11 is disposed at the inner side of the second magnet 12 in the radial direction R, and the number of the first magnetic poles 111 of the first magnet 11 is larger than the number of the second magnetic poles 121 of the second magnet 12. Therefore, with the magnetic gear device 1A according to the present modified example, the speed of the output shaft disposed at the outer side in the radial direction R of the magnetic gear device 1A (output-side rotation speed) can be increased to be higher than the rotation speed of the rotor 22 of the motor 2 (input-side rotation speed). The magnetic gear device 1A according to the present modified example has the same functions and effects as the magnetic gear device 1 according to the first embodiment.

In the magnetic gear device 1A according to the present modified example, the first magnet 11 is disposed at the inner side of the second magnet 12 in the radial direction R.

### Second Modified Example of First Embodiment

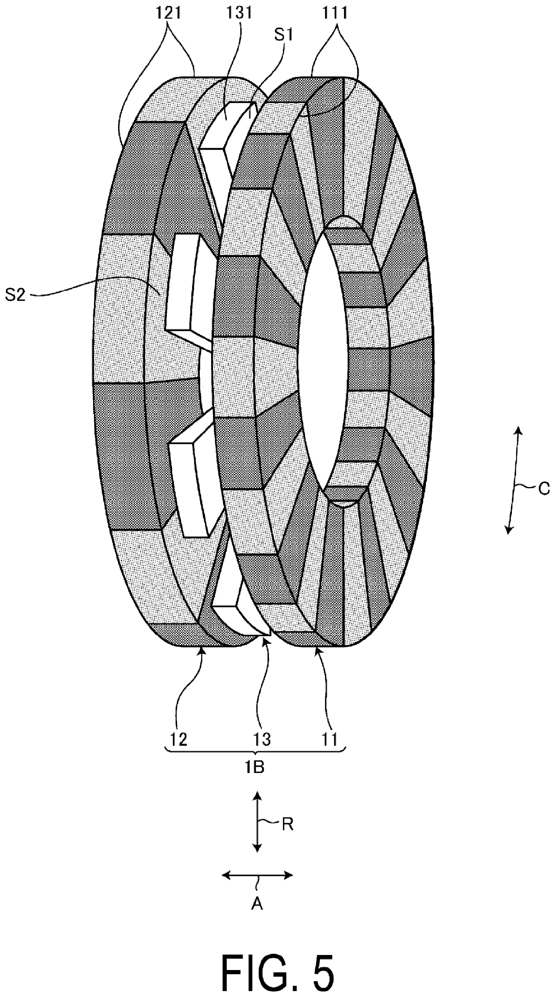

Next, a magnetic gear device 1B according to a second modified example of the first embodiment will be described with reference to FIG. 5. FIG. 5 is a perspective view of a magnetic gear device 1B according to a second modified example of the first embodiment. Note that in the configuration of the magnetic gear device 1B according to the second modified example of the first embodiment, the same components as the components of the magnetic gear device 1 according to the first embodiment are denoted by the same reference numerals and the description of such components is omitted. Although not illustrated, the rotor 22 of the motor 2 similar to the motor 2 of the power transmission device 100 according to the first embodiment is fixed to the inner peripheral surface of the second magnet 12 in the radial direction R.

The magnetic gear device 1B according to the present modified example includes a first magnet 11, a second magnet 12, and a first pole piece 13, and the first magnet 11 and the second magnet 12 are opposed to each other in the axial direction A with the first pole piece 13 interposed.

An outer peripheral surface of the output shaft is fixed to an inner peripheral surface of the first magnet 11 in the radial direction R. That is, the first magnet 11 according to the present modified example is disposed at the output side (driven side) with respect to the second magnet 12.

In the magnetic gear device 1B according to the present modified example, the first magnet 11 and the second magnet 12 are opposed to each other in the axial direction A with the first pole piece 13 interposed.

In the magnetic gear device 1B according to the present modified example, the axis of the first magnet 11 and the axis of the second magnet 12 can be disposed coaxially, and therefore, the magnetic gear device 1B can be easily modularized, and the flexibility of layout can be improved. The magnetic gear device 1B according to the present modified example has the same functions and effects as the magnetic gear device 1 according to the first embodiment.

### Third Modified Example of First Embodiment

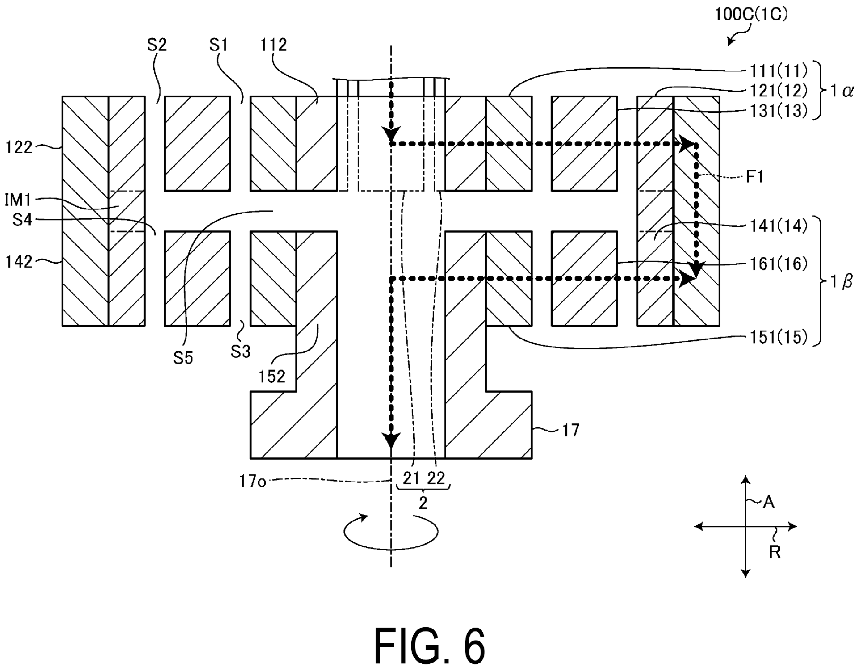

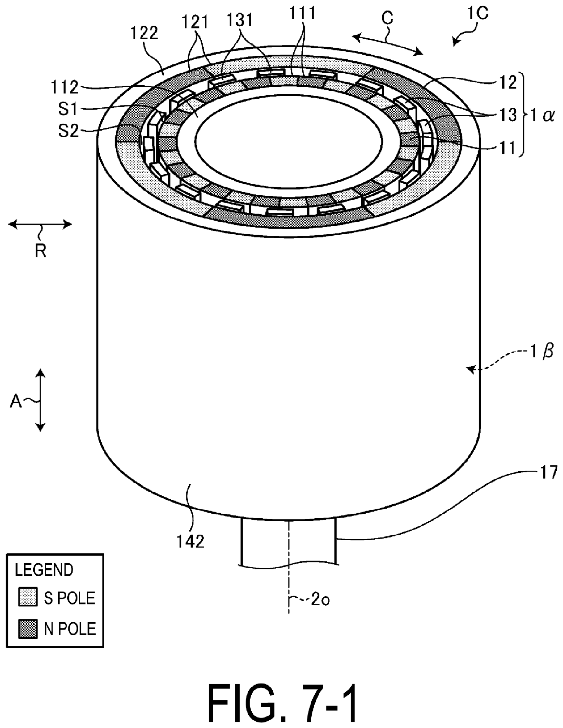

FIG. 6 is a cross-sectional view of a power transmission device 100C including a magnetic gear device 1C according to a third modified example of the first embodiment. FIG. 7-1 is a perspective view of the magnetic gear device 1C illustrated in FIG. 6. FIG. 7-2 is a plan view of a second magnetic gear mechanism 1β included in the magnetic gear device 1C illustrated in FIG. 6. Note that in the configuration of the magnetic gear device 1C according to the third modified example of the first embodiment, the same components as the components of the magnetic gear device 1 according to the first embodiment are denoted by the same reference numerals and the description of such components is omitted. For convenience of illustration, the motor 2 is omitted in FIGS. 7-1 and 7-2. Further, in FIG. 6, the transmission path of the driving force of the motor 2 is indicated by arrows F1.

In the description of the power transmission device 100C including the magnetic gear device 1C illustrated in FIGS. 6, 7-1, and 7-2 according to the present modified example, for ease of understanding directions, an extending direction of the second shaft 17 as an output shaft is referred to as an axial direction A, a rotation direction of the first magnet 11, the second magnet 12, a third magnet 14, and a fourth magnet 15 is referred to as a circumferential direction C, and a direction included in a plane orthogonal to the axial direction A, passing through the axis 2o, and orthogonal to the circumferential direction C is referred to as a radial direction R.

The power transmission device (transmission) 100C illustrated in FIGS. 6, 7-1, and 7-2 according to the present modified example transmits torque of the rotor 22 of the motor 2 as an input-side device to the second shaft 17 as an output shaft. In the power transmission device 100C according to the present modified example, the motor 2 and the magnetic gear device 1C are disposed such that an axis 2o of the stator 21 and the rotor 22 of the motor 2 as input and an axis 2o of the second shaft 17 as an output shaft coincide with each other. The power transmission device 100C includes, for example, a magnetic gear device 1C and a motor 2.

The power transmission device 100C according to the third modified example of the first embodiment increases the rotation speed of the rotor 22 of the motor 2 as input by the second shaft 17 as an output shaft, for example, and outputs the increased rotation speed. The power transmission device 100C is accommodated in, for example, a frame (not illustrated).

When the motor 2 having the above-described configuration is driven, the rotor 22 rotates about the axis 2o with respect to the stator 21, and along with the rotation, the first back yoke 112 and the first magnet 11 fixed to the rotor 22 rotate in the circumferential direction C together with the rotor 22.

The magnetic gear device 1C includes, for example, a first magnet 11, a second magnet 12, a first pole piece 13, a third magnet 14, a fourth magnet 15, and a second pole piece 16. Moreover, the magnetic gear device 1C is provided with a second shaft 17. In the magnetic gear device 1C according to the present modified example, the first magnet 11, the second magnet 12, and the first pole piece 13 constitute a first magnetic gear mechanism 1α, and the third magnet 14, the fourth magnet 15, and the second pole piece 16 constitute a second magnetic gear mechanism 1β. That is, the magnetic gear device 1C is a device including two stages of magnetic gear mechanisms 1α and 1β arranged in the axial direction A. More specifically, the magnetic gear device 1C is a device including the first magnetic gear mechanism 1α and the second magnetic gear mechanism 1β coupled in the axial direction A. More specifically, the first magnetic gear mechanism 1a is disposed at the input side, and the second magnetic gear mechanism 1β is disposed at the output side.

The first magnetic gear mechanism 1α is disposed at one side (input side) in the axial direction A where the motor 2 is disposed. The second magnetic gear mechanism 1β is disposed at the other side (output side) in the axial direction A where the second shaft 17 as the output shaft is disposed.

The first magnet 11 is provided in the magnetic gear device 1C so as to be rotatable about the axis 2o with respect to the frame and the first pole piece 13. The first magnet 11 includes a plurality of (for example, twenty eight) first magnetic poles 111 disposed in the circumferential direction C, and the plurality of first magnetic poles 111 are integrally formed in a ring shape. Moreover, a first space S1 is formed between the first magnet 11 and the first pole piece 13 in the radial direction R. In other words, the first magnet 11 is provided to be rotatable about the axis 2o in a non-contact state with respect to the first pole piece 13.

The plurality of first magnetic poles 111 are disposed such that the N poles and the S poles are alternately arranged in the circumferential direction C. The plurality of first magnetic poles 111 of the first magnet 11 are formed by magnetizing a magnetic body as described later.

The number of the first magnetic poles 111 of the first magnet 11 is larger than the number of the second magnetic poles 121 of the second magnet 12. In addition, the first magnet 11 is provided with, for example, a first back yoke 112 provided at the inner side in the radial direction R. In the magnetic gear device 1C according to the present modified example, the first magnet 11 and the second magnet 12 are disposed so as to be rotatable about the common axis 2o.

The first magnet 11 includes a plurality of (fifty two) first magnetic poles 111 disposed in the circumferential direction C, and the plurality of first magnetic poles 111 are integrally formed in a ring shape. The plurality of first magnetic poles 111 are disposed such that the N poles and the S poles are alternately arranged in the circumferential direction C. In addition, the first magnet 11 is provided with a first back yoke 112 provided at the inner side of the first magnetic poles 111 in the radial direction R. The first space S1 may be filled with a non-magnetic material such as a resin sliding material as long as the first magnet 11 and the first pole piece 13 are allowed to rotate in a case where the first space S1 is in a vacuum state, a case where a fluid such as air, water, or oil is present, or the like.

The second magnet 12 is provided to be rotatable about the axis 2o with respect to the frame and the first pole piece 13. Moreover, a second space S2 is formed between the second magnet 12 and the first pole piece 13 in the radial direction R. In other words, the second magnet 12 is provided to be rotatable about the axis 2o in a non-contact state with respect to the first pole piece 13. The second magnet 12 is formed similarly to the first magnet 11. That is, the second magnet 12 includes a plurality of (six) second magnetic poles 121 disposed in the circumferential direction C, and the plurality of second magnetic poles 121 are integrally formed in a ring shape. The plurality of second magnetic poles 121 are disposed such that the N poles and the S poles are alternately arranged in the circumferential direction C. In addition, the second magnet 12 is provided with a second back yoke 122 at the outer side of the second magnetic poles 121 in the radial direction R. The second space S2 may be filled with a non-magnetic material such as a resin sliding material as long as the second magnet 12 and the first pole piece 13 are allowed to rotate in a case where the second space S2 is in a vacuum state, a case where a fluid such as air, water, or oil is present, or the like.

The first pole piece 13 is constituted by a plurality of (for example, twenty nine) first modulation pieces 131. The first pole piece 13 is located between the first magnet 11 and the second magnet 12 in the radial direction R, and magnetically couples the first magnet 11 and the second magnet 12. The first modulation pieces 131 are each formed of, for example, a magnetic body, are arranged at equal intervals along the circumferential direction C, and are fixed to a frame (not illustrated).

In the magnetic gear mechanism 1α according to the present modified example, the number 11M of pole pairs of the first magnet 11 is twenty six, the number 12M of pole pairs of the second magnet 12 is three, and the number 13M of the modulation pieces 131 of the first pole piece 13 is twenty nine. Therefore, when the second magnet 12 at the outer side in the radial direction R is used for the output, the first magnet 11 at the inner side in the radial direction R is used for the input, and the first pole piece 13 is fixed, a speed increase ratio X1 can be calculated as follows. $X 1 = 11 M / 12 M = 26 / 3 = 8.67$

Alternatively, in the magnetic gear mechanism 1α, when the second magnet 12 is used for the output, the first pole piece 13 is used for the input, and the first magnet 11 is fixed, a speed increase ratio X2 can be calculated as follows. $X 2 = 13 M / 12 M = 29 / 3 = 9.67$

In the first magnetic gear mechanism 1α, the first magnet 11, the second magnet 12, and the first pole piece 13 are formed individually.

The rotor 22 of the motor 2 is fixed to an inner peripheral surface of the first back yoke 112 of the first magnet 11 in the radial direction R. That is, the motor 2 is disposed at the inner side of the first magnet 11 in the radial direction R.

In the first magnetic gear mechanism 1α, the second magnet 12 is disposed at the outer side in the radial direction R, and the first magnet 11 is disposed at the inner side of the second magnet 12 in the radial direction R.

The first magnetic gear mechanism 1α is a so-called flux-modulated magnetic gear (harmonic type magnetic gear device). In the first magnetic gear mechanism 1α, when the first back yoke 112 and the first magnet 11 coupled to the driving side rotate in the circumferential direction XC about the axis 2o, changes in the magnetic fluxes of the plurality of first magnetic poles 111 are modulated by the first pole piece 13 and transmitted to second magnetic poles 121 of the second magnet 12 coupled to the driven side, thus rotating the second magnet 12 about the axis 2o.

In the first magnetic gear mechanism 1α, the number of the second magnetic poles 121 of the second magnet 12 disposed at the output side is smaller than the number of the first magnetic poles 111 of the first magnet 11 disposed at the input side, and therefore when the first magnetic gear mechanism 1α is operated, the rotation speed can be increased although the torque is decreased. Moreover, in the first magnetic gear mechanism 1α, the first magnet 11 has a ring shape where the plurality of first magnetic poles 111 are disposed in the circumferential direction C and the plurality of first magnetic poles 111 are integrally formed. Therefore, in the first magnetic gear mechanism 1α, the pitch of the plurality of first magnetic poles 111 in the circumferential direction C can be reduced, and thus the speed can be increased, as compared with, for example, a magnetic gear device (for example, a device described in JP 2022-150601 A) including a ring-shaped first magnet formed by coupling a plurality of magnets formed individually.

Further, in the first magnetic gear mechanism 1α, the first magnet 11 and the first pole piece 13 are not in contact with each other in the radial direction R, and the first pole piece 13 and the second magnet 12 are not in contact with each other in the radial direction R. Moreover, in the first magnetic gear mechanism 1α, the first pole piece 13 is disposed between the first magnet 11 and the second magnet 12 in the radial direction R, and the first magnet 11 and the second magnet 12 are magnetically coupled to each other by the first pole piece 13. Therefore, when torque equal to or greater than the maximum transmission torque set by the magnetic force of the first magnetic poles 111 and the gap between the first magnet 11 and the first pole piece 13 in the radial direction R is applied to the first magnetic gear mechanism 1α, the first magnetic gear mechanism 1α functions as a torque limiter, and the rotation of the second magnet 12 in the circumferential direction C is stopped even in a state where the first magnet 11 is rotating in the circumferential direction C. Therefore, the first magnetic gear mechanism 1α can protect the motor 2 by separating the driving side and the driven side from each other at the time of overload. Alternatively, when unintended torque is generated by the motor 2, the first magnetic gear mechanism 1α functions as a torque limiter, and can protect the load side by separating the driving side and the driven side from each other. In addition, when the magnetic gear device 1 is used in an electric opening/closing mechanism of a home electric appliance, the magnetic gear device 1 can block the torque from the driving side when a load-side member comes into contact with a human body, and thus can also serve as a safety device to minimize the effect on the human body.

The third magnet 14 is provided to be rotatable about the axis 17o of the second shaft 17 with respect to the frame and the second pole piece 16. Moreover, a third space S3 is formed between the third magnet 14 and the second pole piece 16 in the radial direction R. In other words, the third magnet 14 is provided to be rotatable about the axis 17o in a non-contact state with respect to the second pole piece 16. The third magnet 14 is formed similarly to the first magnet 11. That is, the third magnet 14 includes a plurality of (fifty two) third magnetic poles 141 disposed in the circumferential direction C, and the plurality of third magnetic poles 141 are integrally formed in a ring shape. The plurality of third magnetic poles 141 are disposed such that the N poles and the S poles are alternately arranged in the circumferential direction C. In addition, the third magnet 14 is provided with a third back yoke 142 provided, for example, at the outer side in the radial direction R. The third space S3 may be filled with a non-magnetic material such as a resin sliding material as long as the third magnet 14 and the second pole piece 16 are allowed to rotate in a case where the third space S3 is in a vacuum state, a case where a fluid such as air, water, or oil is present, or the like.

The fourth magnet 15 is provided to be rotatable about the axis 17o of the second shaft 17 with respect to the frame and the second pole piece 16. Moreover, a fourth space S4 is formed between the fourth magnet 15 and the second pole piece 16 in the radial direction R. In other words, the fourth magnet 15 is provided to be rotatable about the axis 17o in a non-contact state with respect to the second pole piece 16. The fourth magnet 15 is formed similarly to the first magnet 11. That is, the fourth magnet 15 includes a plurality of (six) fourth magnetic poles 151 disposed in the circumferential direction C, and the plurality of fourth magnetic poles 151 are integrally formed in a ring shape. The plurality of fourth magnetic poles 151 are disposed such that the N poles and the S poles are alternately arranged in the circumferential direction C. In addition, the fourth magnet 15 is provided with, for example, a fourth back yoke 152 provided at the inner side in the radial direction R. In the magnetic gear mechanism 1β according to the present modified example, the third magnet 14 and the fourth magnet 15 are disposed so as to be rotatable about the common axis 17o. The fourth space S4 may be filled with a non-magnetic material such as a resin sliding material as long as the fourth magnet 15 and the second pole piece 16 are allowed to rotate in a case where the fourth space S4 is in a vacuum state, a case where a fluid such as air, water, or oil is present, or the like.

The second pole piece 16 is constituted by a plurality of (for example, twenty nine) second modulation pieces 161, and modulates the magnetic flux of the magnets 14 and 15. The second pole piece 16 is located between the third magnet 14 and the fourth magnet 15 in the radial direction R, and magnetically couples the third magnet 14 and the fourth magnet 15. The second modulation pieces 161 are each formed of, for example, a magnetic body, are arranged at equal intervals along the circumferential direction C, and are fixed to a frame (not illustrated).

The second shaft 17 is a so-called shaft, and is formed of, for example, a metal member in a cylindrical shape. The second shaft 17 has an axis 17o, is formed integrally with the fourth back yoke 152, and is provided to be rotatable about the axis 17o with respect to the frame. The second shaft 17 extends in the axial direction A with respect to the fourth back yoke 152, and rotates in the circumferential direction C together with the fourth magnet 15 and the fourth back yoke 152. The magnetic gear device 1C outputs torque to the outside by the second shaft 17 rotating in the circumferential direction C about the axis 17o.

In the magnetic gear device 1C according to the present modified example, the second back yoke 122 and the third back yoke 142 are integrally formed. Moreover, the second magnet 12 and the third magnet 14 are integrally formed. The second magnet 12 and the third magnet 14 according to the present modified example extend in the axial direction A.

In other words, in the magnetic gear device 1C, the second magnet 12 and the third magnet 14 are coupled in the axial direction A, and the third magnet 14 rotates in the circumferential direction C together with the second magnet 12. When the second magnet 12 and the third magnet 14 are described more specifically, the second magnet 12 is formed at one side in the axial direction A and the third magnet 14 is formed at the other side in the axial direction A using a ring-shaped magnetic body, by magnetizing the magnetic body as described above. At this time, as a result, an intermediate part IM1 not magnetized is formed between the second magnet 12 and the third magnet 14 in the axial direction A.

In the axial direction A of the magnetic gear device 1C, the first magnet 11 and the fourth magnet 15 are disposed to be opposed to each other with a fifth space S5 interposed so as not to be affected by the magnetic force of each other.

In the second magnetic gear mechanism 1β, the third magnet 14, the fourth magnet 15, and the second pole piece 16 are formed individually.

In the second magnetic gear mechanism 1β, the third magnet 14 is disposed at the outer side in the radial direction R, and the fourth magnet 15 is disposed at the inner side of the third magnet 14 in the radial direction R.

The second magnetic gear mechanism 1β is a so-called flux-modulated magnetic gear (harmonic type magnetic gear device). In the second magnetic gear mechanism 1β, when the third magnet 14 formed integrally with the second magnet 12 rotates in the circumferential direction XC about the axis 17o together with the second magnet 12, changes in the magnetic fluxes of the plurality of third magnetic poles 141 are modulated by the second pole piece 16 and transmitted to the fourth magnetic poles 151 of the fourth magnet 15 coupled to the driven side, thus rotating the fourth magnet 15 in the circumferential direction C about the axis 17o.

In the second magnetic gear mechanism 1β, the number of the fourth magnetic poles 151 of the fourth magnet 15 disposed at the output side is smaller than the number of the third magnetic poles 141 of the third magnet 14 disposed at the input side, and therefore when the second magnetic gear mechanism 1β is operated, the rotation speed can be increased although the torque is decreased. That is, the magnetic gear device 1C according to the present modified example can increase the rotation speed by the two stages of magnetic gear mechanisms 1α and 1β. Moreover, in the second magnetic gear mechanism 1β, the third magnet 14 has a ring shape where the plurality of third magnetic poles 141 are disposed in the circumferential direction C and the plurality of third magnetic poles 141 are integrally formed. Therefore, in the second magnetic gear mechanism 1 β, the pitch of the plurality of third magnetic poles 141 in the circumferential direction C can be reduced, and thus the speed can be increased, as compared with, for example, a magnetic gear device (for example, a device described in JP 2022-150601 A) including a ring-shaped first magnet formed by coupling a plurality of magnets formed individually.

In the second magnetic gear mechanism 1β, the third magnet 14 and the second pole piece 16 are not in contact with each other in the radial direction R, and the second pole piece 16 and the fourth magnet 15 are not in contact with each other in the radial direction R. Moreover, in the second magnetic gear mechanism 1β, the second pole piece 16 is disposed between the third magnet 14 and the fourth magnet 15 in the radial direction R, and the third magnet 14 and the fourth magnet 15 are magnetically coupled to each other by the second pole piece 16. Therefore, when torque equal to or greater than the maximum transmission torque set by the magnetic force of the third magnetic poles 141 and the gap between the third magnet 14 and the second pole piece 16 in the radial direction R is applied to the second magnetic gear mechanism 1β, the second magnetic gear mechanism 1β functions as a torque limiter, and the rotation of the fourth magnet 15 in the circumferential direction C is stopped even in a state where the third magnet 14 is rotating in the circumferential direction C. Therefore, the second magnetic gear mechanism 1β can protect the motor 2 by separating the driving side and the driven side from each other at the time of overload. Alternatively, when unintended torque is generated by the motor 2, the second magnetic gear mechanism 1β functions as a torque limiter, and can protect the load side by separating the driving side and the driven side from each other. In addition, when the magnetic gear device 1 is used in an electric opening/closing mechanism of a home electric appliance, the magnetic gear device 1 can block the torque from the driving side when a load-side member comes into contact with a human body, and thus can also serve as a safety device to minimize the effect on the human body.

In the first magnetic gear mechanism 1α according to the present modified example, the number of the second magnetic poles 121 of the second magnet 12 located at the output side is six, and the number of the second magnetic poles 121 of the first magnet 11 located at the input side is fifty two. Therefore, a speed increase ratio X1 of the first magnetic gear mechanism 1α is calculated as follows. $X 1 = \left(52/2\right) / \left(6/2\right) = 8.67$

In the second magnetic gear mechanism 1β according to the present modified example, the number of the fourth magnetic poles 151 of the fourth magnet 15 located at the output side is six, and the number of the third magnetic poles 141 of the third magnet 14 located at the input side is fifty two. Therefore, a speed increase ratio X2 of the second magnetic gear mechanism 1β is calculated as follows. $X 2 = \left(52/2\right) / \left(6/2\right) = 8.67$

Thus, the reduction ratio of the magnetic gear device 1C according to the present modified example is calculated as follows. $8.67 \times 8.67 = 75.2$

As described above, the magnetic gear device 1C according to the present modified example has the following configuration. The magnetic gear device 1C includes a ring-shaped first magnet 11 including a plurality of first magnetic poles 111 disposed in the circumferential direction C, a ring-shaped second magnet 12 including a plurality of second magnetic poles 121 disposed in the circumferential direction C, a first pole piece 13 located between the first magnet 11 and the second magnet 12 in the radial direction R and magnetically coupling the first magnet 11 and the second magnet 12, a ring-shaped third magnet 14 including a plurality of third magnetic poles 141 disposed in the circumferential direction C, a ring-shaped fourth magnet 15 including a plurality of fourth magnetic poles 151 disposed in the circumferential direction C, and a second pole piece 16 located between the third magnet 14 and the fourth magnet 15 in the radial direction R and magnetically coupling the third magnet 14 and the fourth magnet 15. Moreover, in the magnetic gear device 1C, the second magnet 12 and the third magnet 14 are coupled in the axial direction A, the third magnet 14 rotates together with the second magnet 12, the number of the first magnetic poles 111 of the first magnet 11 is larger than the number of the second magnetic poles 121 of the second magnet 12, and the number of the third magnetic poles 141 of the third magnet 14 is larger than the number of the fourth magnetic poles 151 of the fourth magnet 15. Moreover, in the magnetic gear device 1C, at least one of the four of the first magnet 11 to the fourth magnet 15 has a ring shape. Therefore, with the magnetic gear device 1C according to the present modified example, the rotation speed of the second shaft 17 as an output shaft (output-side rotation speed) can be increased to be higher than the rotation speed of the rotor 22 of the motor 2 (input-side rotation speed). Moreover, in the magnetic gear device 1C according to the present modified example, the first magnet 11 and the first pole piece 13 are not in contact with each other in the radial direction R, the first pole piece 13 and the second magnet 12 are not in contact with each other in the radial direction R, the third magnet 14 and the second pole piece 16 are not in contact with each other in the radial direction R, and the second pole piece 16 and the fourth magnet 15 are not in contact with each other in the radial direction R, making it possible to reduce the sound generated during driving, to prevent the generation of dust due to use, and to eliminate the need to use a lubricant. In addition, since the magnetic gear device 1C does not generate dust due to use and eliminates the need to use a lubricant for the use, it is not necessary to perform maintenance. Further, in the magnetic gear device 1C according to the present modified example, the plurality of first magnetic poles 111 of the first magnet 11 and the plurality of second magnetic poles 121 of the second magnet 12 are magnetically coupled with the first pole piece 13 interposed in the radial direction R, and the plurality of third magnetic poles 141 of the third magnet 14 and the plurality of fourth magnetic poles 151 of the fourth magnet 15 are magnetically coupled with the second pole piece 16 interposed in the radial direction R, and thus the torque density can be increased, as compared with a magnetic gear device where the outer peripheral surface of the ring-shaped first magnet and the outer peripheral surface of the ring-shaped second magnet are opposed to each other and are magnetically coupled only by the opposed magnets.

In the magnetic gear device 1C according to the present modified example, the first magnet 11 includes the plurality of first magnetic poles 111 integrally formed, and the third magnet 14 includes the plurality of third magnetic poles 141 integrally formed. Therefore, the size and weight can be reduced as compared with a magnetic gear device including a ring-shaped magnet formed by coupling individually formed magnets in the circumferential direction C. Moreover, since the magnetic gear device 1C includes the first magnet 11 and the third magnet 14 having the above configuration, the number of components can be reduced, the shapes of the back yokes 112, 122, 142, and 152 and/or the frame can be simplified, and it is not necessary to provide a cover for preventing the first magnetic poles 111 and the third magnetic poles 141 from falling off. In addition, in the first magnet 11, the pitch of the plurality of first magnetic poles 111 in the circumferential direction C is small, and therefore the torque ripple can be reduced, and in the third magnet 14, the pitch of the plurality of third magnetic poles 141 in the circumferential direction C is small, and therefore the torque ripple can be reduced.

Since the magnetic gear device 1C according to the present modified example has the above-described functions and effects, the magnetic gear device 1C can be applied to, for example, a device used in a clean room where dust generation or the like is unfavorable, a device used under a special environment such as the ocean or the aerospace, a house facility or a home appliance requiring safety assurance upon contact with a human body or countermeasures against overload, an electric generator utilizing high efficiency, and the like. More specifically, the magnetic gear device 1 can be applied to a robot arm, a semiconductor manufacturing device, an electric opening/closing mechanism or an electronic lock of a home electric appliance, a cooling pump of an air conditioner or the like, a cooling fan, and the like.

In the magnetic gear device 1C according to the present modified example, the second magnet 12 and the third magnet 14 are integrally formed. Therefore, with the magnetic gear device 1C according to the present modified example, it is possible to improve workability at the time of assembly by reducing the number of components as compared with a magnetic gear device including the second magnet 12 and the third magnet 14 separately formed.

In the magnetic gear device 1C according to the present modified example, the first magnet 11 is disposed at the inner side of the second magnet 12 in the radial direction R. In the magnetic gear device 1 according to the present embodiment, the ring-shaped first magnet 11 including the plurality of first magnetic poles 111 integrally formed is formed by magnetizing the magnetic body as described above, and thus the ring-shaped first magnet 11 can be disposed even at a small pitch at the inner side in the radial direction R. The third magnet 14 is disposed at the outer side of the fourth magnet 15 in the radial direction R. The third magnet 14 is disposed at the outer side of the fourth magnet 15 in the radial direction R.

Although the magnetic gear device 1C described above includes the second magnet 12 and the third magnet 14 integrally formed, the magnetic gear device 1C according to the present modified example is not limited to such a configuration. For example, the second magnet 12 and the third magnet 14 may be formed individually, a separate ring-shaped coupling part may be formed instead of the intermediate part IM1, and the second magnet 12 and the third magnet 14 may be coupled in the axial direction A with the coupling part interposed.

In the magnetic gear device 1C described above, the input and the output may be arranged in reverse. In this case, at the output side, the torque can be increased, although the speed (rotation speed of the output shaft in the circumferential direction C) is reduced.

Further, in the first magnetic gear mechanism 1α of the magnetic gear device 1C according to the above-described modified example, the first magnet 11 is used as the input side, the first pole piece 13 is fixed, the second pole piece 16 is fixed, and the fourth magnet 15 is used as the output side. However, the magnetic gear device 1 according to the present embodiment is not limited to such a configuration. For example, as indicated in Table 2, the input side, the output side, and the fixed members can be changed as appropriate.

### Table 2

**(Table 2)**

| Third modified example of first embodiment | | | | | | | | | | | |
|---|---|---|---|---|---|---|---|---|---|---|---|
| | | | | Used as speed reducer | | | | Used as speed increaser | | | |
| | | | | Third modified example of first embodiment | Another example | Another example | Another example | Another example | Another example | Another example | Another example |
| First stage (highspeed side) | Outer side | Second ring magnet | 12 | Input side | Fixed | Input side | Fixed | Output side | Fixed | Output side | Fixed |
| | PP | First pole piece | 13 | Fixed | Input side | Fixed | Input side | Fixed | Output side | Fixed | Output side |
| | Inner side | First ring magnet | 11 | Intermediate rotation part | Intermediate rotation part | Intermediate rotation part | Intermediate rotation part | Intermediate rotation part | Intermediate rotation part | Intermediate rotation part | Intermediate rotation part |
| Second stage (low-speed side) | Inner side | Fourth ring magnet | 15 | | | | | | | | |
| | PP | Second pole piece | 16 | Fixed | Fixed | Output side | Output side | Fixed | Input side | Input side | Input side |
| | Outer side | Third ring magnet | 14 | Output side | Output side | Fixed | Fixed | Input side | Output side | Fixed | Fixed |

| | |
|---|---|
| * When the number of magnets of multipole magnet (11) is less than the number of poles of PP (13) | * When the number of magnets of multipole magnet (11) is less than the number of poles of PP (13) |

In the above-described modified example, the magnets 11, 12, 14, and 15 are provided with the back yokes 112, 122, 142, and 152, respectively. However, the back yokes 112, 122, 142, and 152 do not necessarily have the function of the back yoke, and it is sufficient that the magnets 11, 12, 14, and 15 and other components can be connected (fixed).

In the magnetic gear device 1C according to the above-described modified example, the first magnet 11 includes fifty-two (twenty-six pole pairs of) first magnetic poles 111. However, the number of the first magnetic poles 111 of the first magnet 11 according to the present modified example is not limited to such a number, and can be set to any number. The same applies to the third magnet 14.

Further, in the magnetic gear device 1C according to the above-described modified example, the second magnet 12 includes six (three pole pairs of) second magnetic poles 121. However, the number of the second magnetic poles 121 of the second magnet 12 according to the present modified example is not limited to such a number, and can be set to any number. The same applies to the fourth magnet 15.

In the magnetic gear device 1C according to the above-described modified example, the first pole piece 13 is constituted by twenty-nine first modulation pieces 131. However, the number of the first modulation pieces 131 constituting the first pole piece 13 according to the present modified example is not limited to such a number, and can be set to any number. When two of the number of the first magnetic poles 111 of the first magnet, the number of the second magnetic poles 121 of the second magnet, and the number of the modulation pieces 131 of the first pole piece 13 are determined to be desired numbers, the one remaining number is appropriately set according to the two other numbers. The same applies to the second pole piece 16.

In the magnetic gear device 1C according to the above-described modified example, for example, the first magnet 11 and the second magnet 12 can be exchanged in position in the radial direction R, and the third magnet 14 and the fourth magnet 15 can be exchanged in position in the radial direction R. In this case, the speed is reduced, while the torque can be increased. In this case, when the first magnet 11 is used for the input, the second magnet 12 is used for the output, and the first pole piece 13 is fixed, a reduction ratio X3 can be calculated as follows.$X 3 = 11 M / 12 M = 26 / 3 = 8.67$

Alternatively, in this case, when the first pole piece 13 is used for the output, the first magnet 11 is used for the input, and the second magnet 12 is fixed, a reduction ratio X4 can be calculated as follows. $X 4 = 13 M / 12 M = 29 / 3 = 9.67$

In addition, for example, in the magnetic gear mechanism 1α according to the above-described modified example, when the first magnet 11 and the second magnet 12 are exchanged, the first magnet 11 is located at the outer side in the radial direction R, the second magnet 12 is located at the inner side in the radial direction R, the first shaft 22 of the motor 2 is coupled to the second magnet 12 to be used as the input shaft, the first magnet 11 is used as the output shaft, and the first pole piece 13 is fixed, a speed increase ratio X5 can be calculated as follows.$X 5 = 11 M / 12 M = 26 / 3 = 8.67$

Alternatively, in the first magnetic gear mechanism 1α in this case, when the first pole piece 13 is used for the output, the first magnet 11 is fixed, and the second magnet 12 is used for the input, a reduction ratio X6 can be calculated as follows. $X 6 = 13 M / 12 M = 29 / 3 = 9.67$

In the magnetic gear device 1C according to the above-described modified example, the second magnet 12 includes the plurality of second magnetic poles 121 disposed in the circumferential direction C, and the plurality of second magnetic poles 121 are integrally formed in a ring shape. However, the second magnet 12 according to the present modified example can also be formed by joining a plurality of magnets each formed in an arc shape and having two second magnetic poles 121. The same applies to the first magnet 11, the third magnet 14, and the fourth magnet 15.

Further, in the magnetic gear device 1C according to the above-described modified example, the two stages of magnetic gear mechanisms 1α and 1β are arranged in the axial direction A. However, the magnetic gear device 1C according to the present modified example is not limited to such a configuration. For example, the magnetic gear device 1C may include three or more stages of magnetic gear mechanisms arranged in the axial direction A.

### Fourth Modified Example of First Embodiment

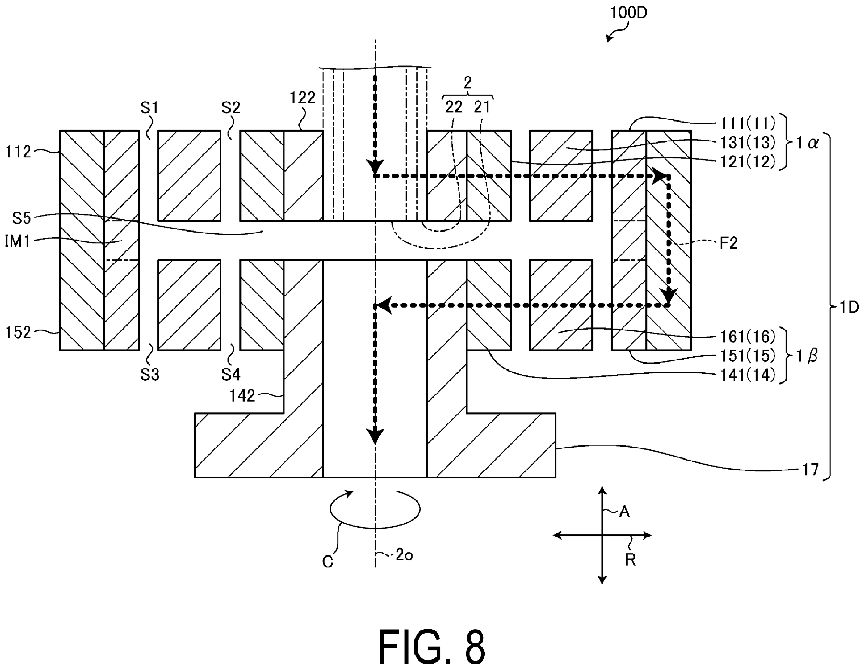

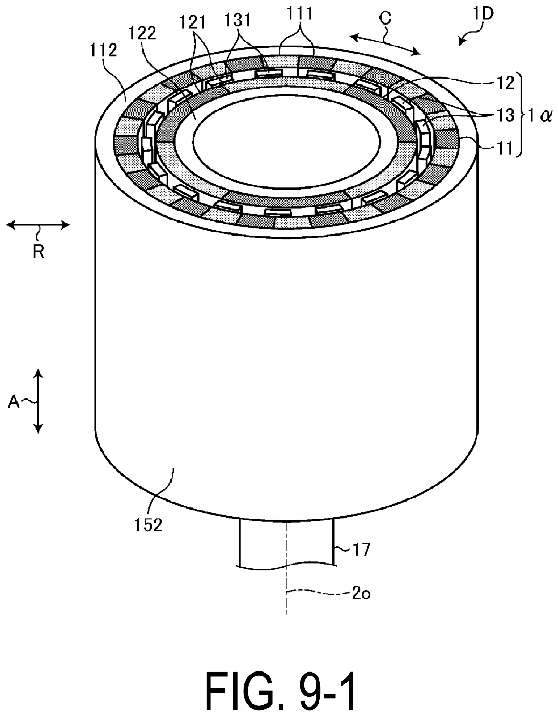

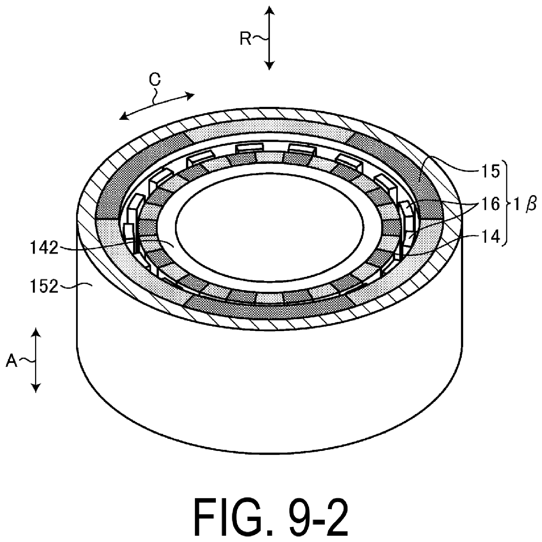

Next, a magnetic gear device 1D according to a fourth modified example of the first embodiment will be described with reference to FIGS. 8, 9-1, and 9-2. FIG. 8 is a cross-sectional view of a power transmission device 100D including a magnetic gear device 1D according to a fourth modified example of the first embodiment. FIG. 9-1 is a perspective view of the magnetic gear device 1D illustrated in FIG. 8. FIG. 9-2 is a perspective view of the magnetic gear device illustrated in FIG. 8, illustrating the other side in the axial direction A. Note that in the configuration of the magnetic gear device 1D according to the fourth modified example of the first embodiment, the same components as the components of the magnetic gear device 1C according to the third modified example of the first embodiment are denoted by the same reference numerals and the description of such components is omitted. For convenience of illustration, the motor 2 is omitted in FIGS. 9-1 and 9-2. Further, in FIG. 8, the transmission path of the driving force of the motor 2 is indicated by arrows F2.

The power transmission device 100D includes, for example, a magnetic gear device 1D and a motor 2.

The magnetic gear device 1D includes a first magnetic gear mechanism 1α and a second magnetic gear mechanism 1β. Moreover, the magnetic gear device 1D is provided with a second shaft 17. The magnetic gear device 1 is a device including the first magnetic gear mechanism 1α and the second magnetic gear mechanism 1β coupled in the axial direction A.

The first magnetic gear mechanism 1α includes a first magnet 11, a second magnet 12, and a first pole piece 13.

The first magnet 11 is disposed at the outer side of the second magnet 12 in the radial direction R in the first magnetic gear mechanism 1α. The first back yoke 112 is disposed at the outer side of the first magnet 11 in the radial direction R. The first magnet 11 according to the present modified example is disposed at the output side (driven side) with respect to the second magnet 12.

The second magnet 12 is disposed at the inner side of the first magnet 11 in the radial direction R in the first magnetic gear mechanism 1 α, and the inner peripheral surface of the second back yoke 122 is fixed to the outer peripheral surface of the rotor 22. That is, the second magnet 12 according to the present modified example is disposed at the input side (driving side) with respect to the first magnet 11.

In the first magnetic gear mechanism 1α of the magnetic gear device 1D according to the present modified example, the number of the first magnetic poles 111 of the first magnet 11 disposed at the output side is larger than the number of the second magnetic poles 121 of the second magnet 12 disposed at the input side, and therefore when the first magnetic gear mechanism 1α is operated, the torque can be increased although the rotation speed in the circumferential direction C is reduced.

The second magnetic gear mechanism 1β is constituted by a third magnet 14, a fourth magnet 15, and a second pole piece 16.

The third magnet 14 is disposed at the inner side of the fourth magnet 15 in the radial direction R in the second magnetic gear mechanism 1β. The third back yoke 132 is disposed at the inner side of the third magnet 14 in the radial direction R. The third magnet 14 according to the present modified example is disposed at the output side (driven side) with respect to the fourth magnet 15. The third back yoke 132 is formed integrally with the second shaft 17. That is, the third back yoke 132 is coupled to the second shaft 17.

In the second magnetic gear mechanism 1β, the fourth magnet 15 is disposed at the outer side of the third magnet 14 in the radial direction R, and the fourth back yoke 152 is disposed at the outer side of the fourth magnet 15 in the radial direction R. The fourth magnet 15 according to the present modified example is disposed at the input side (driving side) with respect to the third magnet 14.

In the power transmission device 100D according to the present modified example, when the motor 2 is driven, the rotor 22 rotates about the axis 2o with respect to the stator 21, and along with the rotation, the second back yoke 122 and the second magnet 12 fixed to the outer peripheral surface of the rotor 22 rotate in the circumferential direction C together with the rotor 22. The change in the magnetic flux of the second magnetic poles 121 of the second magnet 12 is modulated by the first pole piece 13 and transmitted to the first magnetic poles 111 of the first magnet 11. Therefore, the first magnet 11 rotates in the circumferential direction C together with the rotation of the second magnet 12 in the circumferential direction C. Since the first magnet 11 and the fourth magnet 15 are integrally formed, the fourth magnet 15 rotates in the circumferential direction C together with the rotation of the first magnet 11 in the circumferential direction C. The change in the magnetic flux of the fourth magnetic poles 151 of the fourth magnet 15 is modulated by the second pole piece 16 and transmitted to the third magnetic poles 141 of the third magnet 14. Since the second shaft 17 is fixed to the third magnet 14, the second shaft 17 rotates in the circumferential direction C together with the rotation of the third magnet 14 in the circumferential direction C.

In the second magnetic gear mechanism 1β of the magnetic gear device 1D according to the present modified example, the number of the third magnetic poles 141 of the third magnet 14 disposed at the output side is larger than the number of the fourth magnetic poles 151 of the fourth magnet 15 disposed at the input side, and therefore when the second magnetic gear mechanism 1β is operated, the torque can be increased although the rotation speed in the circumferential direction C is reduced. That is, the magnetic gear device 1D according to the present modified example can increase torque by the two stages of magnetic gear mechanisms 1α and 1β.

In the magnetic gear device 1D according to the present modified example, the first magnet 11 is disposed at the outer side of the second magnet 12 in the radial direction R, and the third magnet 14 is disposed at the inner side of the fourth magnet 15 in the radial direction R. The magnetic gear device 1D according to the present modified example has the same functions and effects as the magnetic gear device 1C according to the third modified example of the first embodiment.

In the magnetic gear device 1D according to the above-described modified example, the two stages of magnetic gear mechanisms 1α and 1β are arranged in the axial direction A. However, the magnetic gear device 1D according to the present modified example is not limited to such a configuration. For example, the magnetic gear device 1D may include three or more stages of magnetic gear mechanisms arranged in the axial direction A.

Further, in the magnetic gear device 1D according to the above-described modified example, the second magnet 12 is used as the input side, the first pole piece 13 is fixed, the second pole piece 16 is fixed, and the third magnet 14 is used as the output side. However, the magnetic gear device 1D according to the present modified example is not limited to such a configuration. For example, as indicated in Table 3, the input side, the output side, and the fixed members can be changed as appropriate.

### Table 3

**(Table 3)**

| Fourth modified example of first embodiment | | | | | | | | | | | |
|---|---|---|---|---|---|---|---|---|---|---|---|
| | | | | Used as speed reducer | | | | Used as speed increaser | | | |
| | | | | Fourth modified example of first embodiment | Another example | Another example | Another example | Another example | Another example | Another example | Another example |
| First stage (high-speed side) | Inner side | Second ring magnet | 12 | Input side | Fixed | Input side | Fixed | Output side | Fixed | Output side | Fixed |
| | PP | First pole piece | 13 | Fixed | Input side | Fixed | Input side | Fixed | Output side | Fixed | Output side |
| | Outer side | First ring magnet | 11 | Intermediate rotation part | Intermediate rotation part | Intermediate rotation part | Intermediate rotation part | Intermediate rotation part | Intermediate rotation part | Intermediate rotation part | Intermediate rotation part |
| Second stage (low-speed side) | Outer side | Fourth ring magnet | 15 | | | | | | | | |
| | PP | Second pole piece | 16 | Fixed | Fixed | Output side | Output side | Fixed | Input side | Input side | Input side |
| | Inner side | Third ring magnet | 14 | Output side | Output side | Fixed | Fixed | Input side | Output side | Fixed | Fixed |

| | |
|---|---|
| * When the number of magnets of multipole magnet (11) is less than the number of poles of PP (13) | * When the number of magnets of multipole magnet (11) is less than the number of poles of PP (13) |

### Fifth modified example of first embodiment

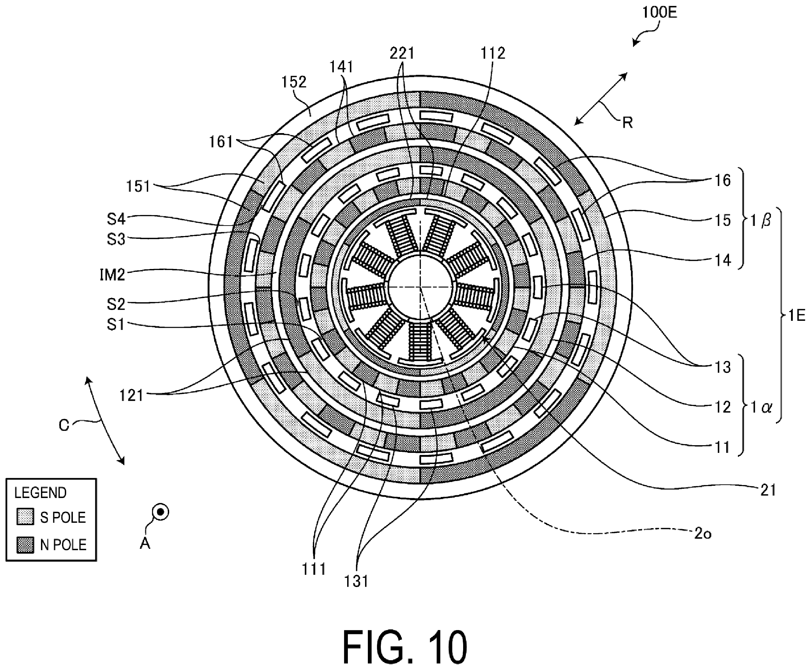

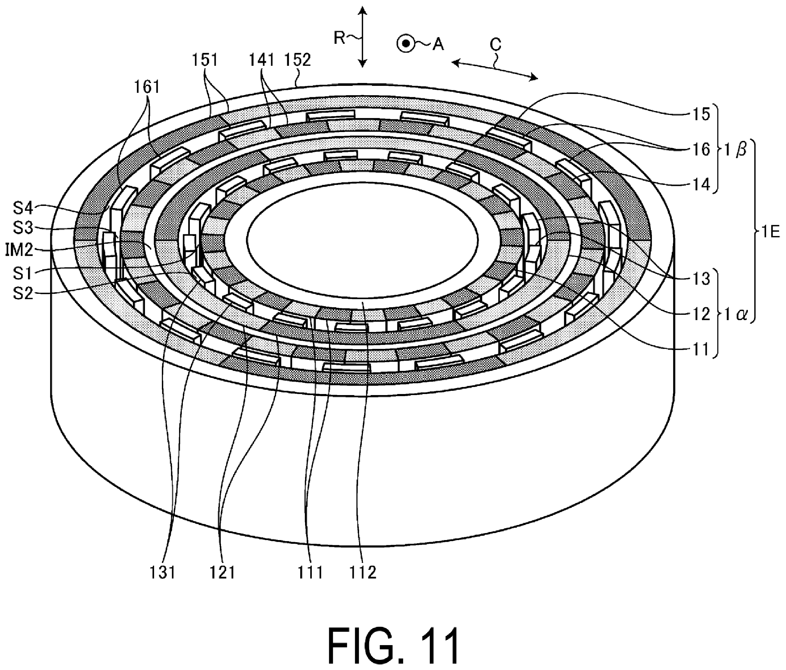

Next, a magnetic gear device 1E according to a fifth modified example of the first embodiment will be described with reference to FIGS. 10 and 11. FIG. 10 is a plan view of a power transmission device 100E including a magnetic gear device 1E according to a fifth modified example of the first embodiment. FIG. 11 is a perspective view of the magnetic gear device 1E illustrated in FIG. 10. Note that in the configuration of the power transmission device 100E according to the fifth modified example of the first embodiment, the same components as the components of the power transmission device 100C according to the third modified example of the first embodiment are denoted by the same reference numerals and the description of such components is omitted. In FIG. 10-2, the motor 2 is omitted.

The power transmission device 100E according to the present modified example includes a motor 2 and a magnetic gear device 1E.

The magnetic gear device 1E includes a first magnetic gear mechanism 1α and a second magnetic gear mechanism 1β. Moreover, the magnetic gear device 1E is provided with a second shaft 17. The magnetic gear device 1E is a device including the first magnetic gear mechanism 1α and the second magnetic gear mechanism 1β coupled in the radial direction R.

The first magnetic gear mechanism 1α includes a first magnet 11, a second magnet 12, and a first pole piece 13.

The first magnet 11 is disposed at the inner side of the second magnet 12 in the radial direction R in the first magnetic gear mechanism 1α. A first back yoke 112 is provided at the inner side of the first magnet 11 according to the present modified example in the radial direction R, and the inner peripheral surface of the first back yoke 112 is fixed to the outer peripheral surface of the rotor 22. The first magnet 11 according to the present modified example is disposed at the input side (driving side) with respect to the second magnet 12.

The second magnet 12 is disposed at the outer side of the first magnet 11 in the radial direction R in the first magnetic gear mechanism 1α. The second magnet 12 according to the present modified example is not provided with a back yoke. The second magnet 12 according to the present modified example is disposed at the output side (driven side) with respect to the first magnet 11.

The second magnetic gear mechanism 1β is constituted by a third magnet 14, a fourth magnet 15, and a second pole piece 16.

The third magnet 14 is disposed at the inner side of the fourth magnet 15 in the radial direction R in the second magnetic gear mechanism 1β. The third magnet 14 is not provided with a back yoke. The third magnet 14 according to the present modified example is disposed at the input side (driving side) with respect to the fourth magnet 15.

The fourth magnet 15 is disposed at the outer side of the third magnet 14 in the radial direction R in the second magnetic gear mechanism 1β. The fourth magnet 15 according to the present modified example is provided with a fourth back yoke 152 provided at the outer side in the radial direction R. An intermediate transmission mechanism (not illustrated) is disposed at the outer side of the fourth back yoke 152 in the radial direction R, and the driving force of the fourth magnet 15 is transmitted to the output shaft via the intermediate transmission mechanism. The fourth magnet 15 according to the present modified example is disposed at the output side (driven side) with respect to the third magnet 14. In the magnetic gear device 1E according to the present modified example, the first magnet 11, the second magnet 12, the third magnet 14, and the fourth magnet 15 are disposed so as to be rotatable about the common axis 2o.

In the power transmission device 100E according to the present modified example, the second magnet 12 and the third magnet 14 are integrally formed. In other words, in the magnetic gear device 1E, the second magnet 12 and the third magnet 14 are coupled in the radial direction R, and the third magnet 14 rotates together with the second magnet 12. When the second magnet 12 and the third magnet 14 are described more specifically, the third magnet 14 is formed at the outer side in the radial direction R and the second magnet 12 is formed at the inner side in the radial direction R using a ring-shaped magnetic body, by magnetizing the magnetic body as described above. At this time, as a result, an intermediate part IM2 not magnetized is formed between the second magnet 12 and the third magnet 14 in the radial direction R.

In the power transmission device 100E according to the present modified example, when the motor 2 is driven, the rotor 22 rotates about the axis 2o with respect to the stator 21, and along with the rotation, the first back yoke 112 and the first magnet 11 fixed to the outer peripheral surface of the rotor 22 rotate in the circumferential direction C together with the rotor 22. The change in the magnetic flux of the first magnetic poles 111 of the first magnet 11 is modulated by the first pole piece 13 and transmitted to the second magnetic poles 121 of the second magnet 12. Therefore, the second magnet 12 rotates in the circumferential direction C together with the rotation of the first magnet 11 in the circumferential direction C. Since the second magnet 12 and the third magnet 14 are integrally formed, the third magnet 14 rotates in the circumferential direction C together with the rotation of the second magnet 12 in the circumferential direction C. The change in the magnetic flux of the third magnetic poles 141 of the third magnet 14 is modulated by the second pole piece 16 and transmitted to the fourth magnetic poles 151 of the fourth magnet 15. Therefore, the fourth magnet 15 rotates in the circumferential direction C together with the rotation of the third magnet 14 in the circumferential direction C. Then, an output shaft (not illustrated) coupled to the fourth back yoke 152 of the fourth magnet 15 via an intermediate output mechanism (not illustrated) rotates together with the rotation of the fourth magnet 15 in the circumferential direction C.

The power transmission device 100E according to the present modified example has the following configuration. The power transmission device 100E includes a ring-shaped first magnet 11 including a plurality of first magnetic poles 111 disposed in the circumferential direction C, a ring-shaped second magnet 12 including a plurality of second magnetic poles 121 disposed in the circumferential direction C, a first pole piece 13 located between the first magnet 11 and the second magnet 12 in the radial direction R and magnetically coupling the first magnet 11 and the second magnet 12, a ring-shaped third magnet 14 including a plurality of third magnetic poles 141 disposed in the circumferential direction C, a ring-shaped fourth magnet 15 including a plurality of fourth magnetic poles 151 disposed in the circumferential direction C, and a second pole piece 16 located between the third magnet 14 and the fourth magnet 15 and magnetically coupling the third magnet 14 and the fourth magnet 15. Moreover, the second magnet 12 and the third magnet 14 are coupled in the radial direction R of the power transmission device 100E, the third magnet 14 rotates together with the second magnet 12, the number of the first magnetic poles 111 of the first magnet 11 is larger than the number of the second magnetic poles 121 of the second magnet 12, the number of the third magnetic poles 141 of the third magnet 14 is larger than the number of the fourth magnetic poles 151 of the fourth magnet 15, the plurality of first magnetic poles 111 of the first magnet 11 are integrally formed, and the plurality of third magnetic poles 141 of the third magnet 14 are integrally formed. Therefore, with the power transmission device 100E according to the present modified example, the rotation speed of the second shaft 17 as an output shaft (output-side rotation speed) can be increased to be higher than the rotation speed of the rotor 22 of the motor 2 (input-side rotation speed). Moreover, the power transmission device 100E according to the present modified example has the same functions and effects as the power transmission device 100C according to the third modified example of the first embodiment.

In the power transmission device 100E according to the present modified example, the second magnet 12 and the third magnet 14 are integrally formed, and therefore it is possible to improve workability at the time of assembly by reducing the number of components as compared with a power transmission device including the second magnet 12 and the third magnet 14 separately formed.

In the power transmission device 100E according to the present modified example, the first magnet 11 is disposed at the inner side of the second magnet 12 in the radial direction R, and the third magnet 14 is disposed at the inner side of the fourth magnet 15 in the radial direction R.

Although the power transmission device 100E described above includes the second magnet 12 and the third magnet 14 integrally formed, the power transmission device 100E according to the present modified example is not limited to such a configuration. For example, the second magnet 12 and the third magnet 14 may be formed individually, a separate ring-shaped coupling part may be formed instead of the intermediate part IM2, and the second magnet 12 and the third magnet 14 may be coupled in the radial direction R with the coupling part interposed.

In the magnetic gear device 1E according to the above-described modified example, the two stages of magnetic gear mechanisms 1α and 1β are arranged in the radial direction R. However, the magnetic gear device 1E according to the present modified example is not limited to such a configuration. For example, the magnetic gear device 1E may include three or more stages of magnetic gear mechanisms arranged in the radial direction R. Further, a three-stage magnetic gear device can be configured by combining the magnetic gear device 1E according to the above-described modified example and the magnetic gear device 1D.

Further, in the magnetic gear device 1E according to the above-described modified example, the second magnet 12 is used as the input side, the first pole piece 13 is fixed, the second pole piece 16 is fixed, and the third magnet 14 is used as the output side. However, the magnetic gear device 1E according to the present modified example is not limited to such a configuration. For example, as indicated in Table 4, the input side, the output side, and the fixed members can be changed as appropriate.

### Table 4

**(Table 4)**

| Fifth modified example of first embodiment | | | | | | | | | | | |
|---|---|---|---|---|---|---|---|---|---|---|---|
| | | | | Used as speed reducer | | | | Used as speed increaser | | | |
| | | | | Fifth modified example of first embodiment | Another example | Another example | Another example | Another example | Another example | Another example | Another example |
| First stage (high-speed side) | Outer side | Second ring magnet | 12 | Input side | Fixed | Input side | Fixed | Output side | Fixed | Output side | Fixed |
| | PP | First pole piece | 13 | Fixed | Input side | Fixed | Input side | Fixed | Output side | Fixed | Output side |
| | Inner side | First ring magnet | 11 | Intermediate rotation part | Intermediate rotation part | Intermediate rotation part | Intermediate rotation part | Intermediate rotation part | Intermediate rotation part | Intermediate rotation part | Intermediate rotation part |
| Second stage (low-speed side) | Outer side | Fourth ring magnet | 15 | | | | | | | | |
| | PP | Second pole piece | 16 | Fixed | Fixed | Output side | Output side | Fixed | Input side | Input side | Input side |
| | Inner side | Third ring magnet | 14 | Output side | Output side | Fixed | Fixed | Input side | Output side | Fixed | Fixed |

| | |
|---|---|
| * When the number of magnets of multipole magnet (11) is less than the number of poles of PP (13) | * When the number of magnets of multipole magnet (11) is less than the number of poles of PP (13) |

### Sixth Modified Example of First Embodiment

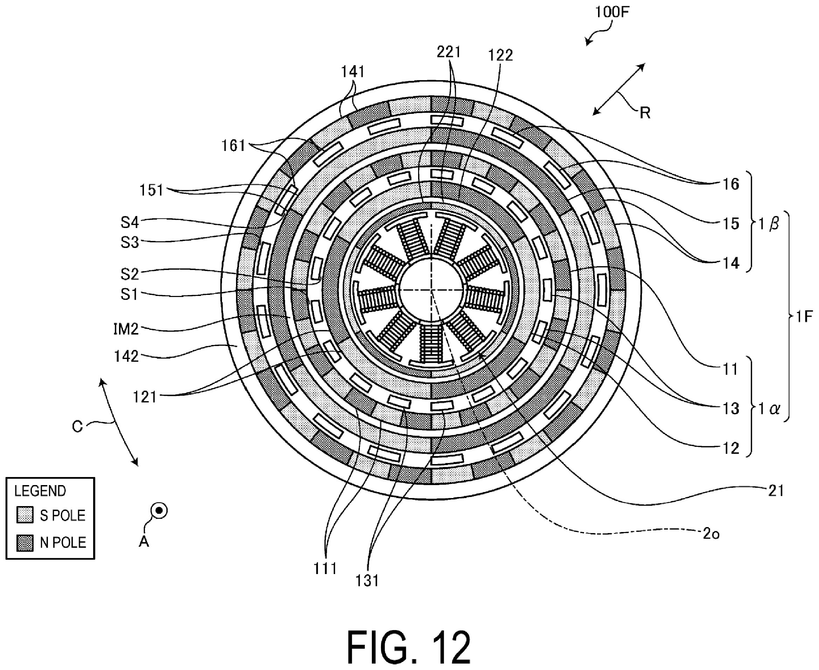

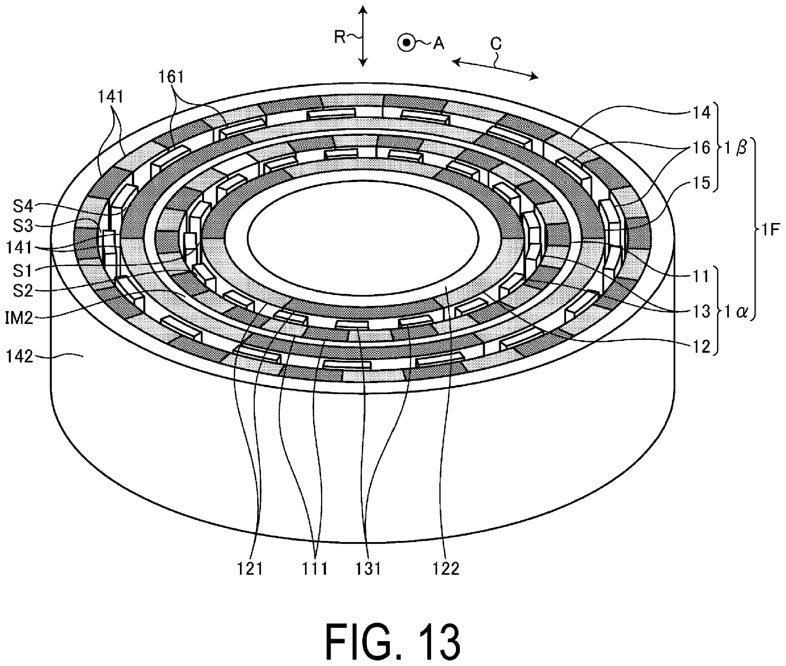

Next, a magnetic gear device 1F according to a sixth modified example of the first embodiment will be described with reference to FIGS. 12 and 13. FIG. 12 is a plan view of a power transmission device 100F including a magnetic gear device 1F according to a sixth modified example of the first embodiment. FIG. 13 is a perspective view of the magnetic gear device 1F illustrated in FIG. 12. Note that in the configuration of the power transmission device 100F according to the sixth modified example of the first embodiment, the same components as the components of the power transmission device 100C according to the third modified example of the first embodiment are denoted by the same reference numerals and the description of such components is omitted. In FIG. 13, the motor 2 is omitted.

The power transmission device 100F according to the present modified example includes a motor 2 and a magnetic gear device 1F.

The magnetic gear device 1F includes a first magnetic gear mechanism 1α and a second magnetic gear mechanism 1β. Moreover, the magnetic gear device 1F is provided with a second shaft 17. The magnetic gear device 1F is a device including the first magnetic gear mechanism 1α and the second magnetic gear mechanism 1β coupled in the radial direction R.

The first magnetic gear mechanism 1α includes a first magnet 11, a second magnet 12, and a first pole piece 13.

The first magnet 11 is disposed at the outer side of the second magnet 12 in the radial direction R in the first magnetic gear mechanism 1α. The first magnet 11 is not provided with a back yoke. The first magnet 11 according to the present modified example is disposed at the output side (driven side) with respect to the second magnet 12.

The second magnet 12 is disposed at the inner side of the first magnet 11 in the radial direction R in the first magnetic gear mechanism 1α. A second back yoke 122 is provided at the inner side of the second magnet 12 in the radial direction R, and the inner peripheral surface of the second back yoke 122 is fixed to the outer peripheral surface of the rotor 22. The second magnet 12 according to the present modified example is disposed at the input side (driving side) with respect to the first magnet 11.

The second magnetic gear mechanism 1β is constituted by a third magnet 14, a fourth magnet 15, and a second pole piece 16.

The third magnet 14 is disposed at the outer side of the fourth magnet 15 in the radial direction R in the second magnetic gear mechanism 1β. The third magnet 14 according to the present modified example is provided with a third back yoke 142 provided at the outer side in the radial direction R. An intermediate transmission mechanism (not illustrated) is disposed at the outer side of the third back yoke 142 in the radial direction R, and the driving force of the third magnet 14 is transmitted to the output shaft via the intermediate transmission mechanism. The third magnet 14 according to the present modified example is disposed at the output side (driven side) with respect to the fourth magnet 15.

The fourth magnet 15 is disposed at the inner side of the third magnet 14 in the radial direction R in the second magnetic gear mechanism 1β. The fourth magnet 15 according to the present modified example is not provided with a back yoke. The fourth magnet 15 according to the present modified example is disposed at the input side (driving side) with respect to the third magnet 14. In the magnetic gear device 1F according to the present modified example, the first magnet 11, the second magnet 12, the third magnet 14, and the fourth magnet 15 are disposed so as to be rotatable about the common axis 2o.

In the power transmission device 100F according to the present modified example, the first magnet 11 and the fourth magnet 15 are integrally formed. In other words, in the magnetic gear device 1F, the first magnet 11 and the fourth magnet 15 are coupled in the radial direction R, and the fourth magnet 15 rotates together with the first magnet 11. When the first magnet 11 and the fourth magnet 15 are described more specifically, the fourth magnet 15 is formed at the outer side in the radial direction R and the first magnet 11 is formed at the inner side in the radial direction R using a ring-shaped magnetic body, by magnetizing the magnetic body as described above. At this time, as a result, an intermediate part IM2 not magnetized is formed between the first magnet 11 and the fourth magnet 15 in the radial direction R.

In the power transmission device 100F according to the present modified example, when the motor 2 is driven, the rotor 22 rotates about the axis 2o with respect to the stator 21, and along with the rotation, the second back yoke 122 and the second magnet 12 fixed to the outer peripheral surface of the rotor 22 rotate in the circumferential direction C together with the rotor 22. The change in the magnetic flux of the second magnetic poles 121 of the second magnet 12 is modulated by the first pole piece 13 and transmitted to the first magnetic poles 111 of the first magnet 11. Therefore, the first magnet 11 rotates in the circumferential direction C together with the rotation of the second magnet 12 in the circumferential direction C. Since the first magnet 11 and the fourth magnet 15 are integrally formed, the fourth magnet 15 rotates in the circumferential direction C together with the rotation of the first magnet 11 in the circumferential direction C. The change in the magnetic flux of the fourth magnetic poles 151 of the fourth magnet 15 is modulated by the second pole piece 16 and transmitted to the third magnetic poles 141 of the third magnet 14. Therefore, the third magnet 14 rotates in the circumferential direction C together with the rotation of the fourth magnet 15 in the circumferential direction C. Then, an output shaft (not illustrated) coupled to the third back yoke 142 of the third magnet 14 via an intermediate output mechanism (not illustrated) rotates together with the rotation of the third magnet 14 in the circumferential direction C.

The power transmission device 100F according to the present modified example has the following configuration. The power transmission device 100F includes a ring-shaped first magnet 11 including a plurality of first magnetic poles 111 disposed in the circumferential direction C, a ring-shaped second magnet 12 including a plurality of second magnetic poles 121 disposed in the circumferential direction C, a first pole piece 13 located between the first magnet 11 and the second magnet 12 in the radial direction R and magnetically coupling the first magnet 11 and the second magnet 12, a ring-shaped third magnet 14 including a plurality of third magnetic poles 141 disposed in the circumferential direction C, a ring-shaped fourth magnet 15 including a plurality of fourth magnetic poles 151 disposed in the circumferential direction C, and a second pole piece 16 located between the third magnet 14 and the fourth magnet 15 and magnetically coupling the third magnet 14 and the fourth magnet 15. Moreover, the first magnet 11 and the fourth magnet 15 are coupled in the radial direction R of the power transmission device 100F according to the present modified example, the fourth magnet 15 rotates together with the first magnet 11, the number of the first magnetic poles 111 of the first magnet 11 is larger than the number of the second magnetic poles 121 of the second magnet 12, the number of the third magnetic poles 141 of the third magnet 14 is larger than the number of the fourth magnetic poles 151 of the fourth magnet 15, the plurality of first magnetic poles 111 of the first magnet 11 are integrally formed, and the plurality of third magnetic poles 141 of the third magnet 14 are integrally formed. Therefore, with the power transmission device 100F according to the present modified example, the torque of the output shaft (output-side torque) can be increased to be more than the torque of the rotor 22 of the motor 2 (input-side torque). Moreover, the power transmission device 100F according to the present modified example has the same functions and effects as the power transmission device 100C according to the third modified example of the first embodiment.

In the power transmission device 100F according to the present modified example, the first magnet 11 and the fourth magnet 15 are integrally formed, and therefore it is possible to improve workability at the time of assembly by reducing the number of components as compared with a power transmission device including the first magnet 11 and the fourth magnet 15 separately formed.

In the power transmission device 100F according to the present modified example, the first magnet 11 is disposed at the outer side of the second magnet 12 in the radial direction R, and the third magnet 14 is disposed at the outer side of the fourth magnet 15 in the radial direction R.

Although the power transmission device 100F described above includes the first magnet 11 and the fourth magnet 15 integrally formed, the power transmission device 100F according to the present modified example is not limited to such a configuration. For example, the first magnet 11 and the fourth magnet 15 may be formed individually, a separate ring-shaped coupling part may be formed instead of the intermediate part IM2, and the first magnet 11 and the fourth magnet 15 may be coupled in the radial direction R with the coupling part interposed. Further, a three-stage magnetic gear device can be configured by combining the magnetic gear device 1F according to the above-described modified example and the magnetic gear device 1D with the input and the output reversed.

Further, in the magnetic gear device 1F according to the above-described modified example, the first magnet 11 is used as the input side, the first pole piece 13 is fixed, the second pole piece 16 is fixed, and the fourth magnet 15 is used as the output side. However, the magnetic gear device 1F according to the present modified example is not limited to such a configuration. For example, as indicated in Table 5, the input side, the output side, and the fixed members can be changed as appropriate.

### Table 5

**(Table 5)**

| Sixth modified example of first embodiment | | | | | | | | | | | |
|---|---|---|---|---|---|---|---|---|---|---|---|
| | | | | Used as speed reducer | | | | Used as speed increaser | | | |
| | | | | Sixth modified example of first embodiment | Another example | Another example | Another example | Another example | Another example | Another example | Another example |
| First stage (high-speed side) | Oute r side | First ring magnet | 11 | Input side | Fixed | Input side | Fixed | Output side | Fixed | Output side | Fixed |
| | PP | First pole piece | 13 | Fixed | Input side | Fixed | Input side | Fixed | Output side | Fixed | Output side |
| | Inner side | Second ring magnet | 12 | Intermediate rotation part | Intermediate rotation part | Intermediate rotation part | Intermediate rotation part | Intermediate rotation part | Intermediate rotation part | Intermediate rotation part | Intermediate rotation part |
| Second stage (low-speed side) | Oute r side | Third ring magnet | 14 | | | | | | | | |
| | PP | Second pole piece | 16 | Fixed | Fixed | Output side | Output side | Fixed | Input side | Input side | Input side |
| | Inner side | Fourth ring magnet | 15 | Output side | Output side | Fixed | Fixed | Input side | Output side | Fixed | Fixed |

| | |
|---|---|
| * When the number of magnets of multipole magnet (14) is less than the number of poles of PP (16) | * When the number of magnets of multipole magnet (14) is less than the number of poles of PP (16) |

### Second Embodiment

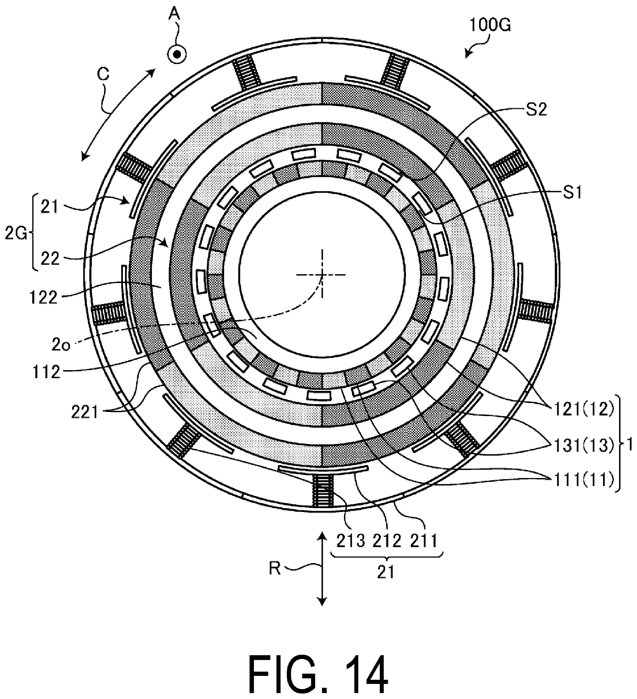

FIG. 14 is a plan view of a power transmission device 100G including a magnetic gear device 1 according to a second embodiment. Note that in the configuration of the power transmission device 100G according to the second embodiment, the same components as the components of the power transmission device 100 according to the first embodiment are denoted by the same reference numerals and the description of such components is omitted.

The power transmission device 100G includes, for example, a magnetic gear device 1 and a motor 2G.

The motor 2G is an inner rotor type including the rotor 22 disposed at the inner side of the stator 21 in the radial direction R.

In the magnetic gear device 1, the first magnet 11 is disposed at the inner side in the radial direction R, and the second magnet 12 is disposed at the outer side of the first magnet 11 in the radial direction R.

The power transmission device 100G according to the present embodiment has the same functions and effects as the power transmission device 100 according to the first embodiment.

Further, the power transmission device 100G according to the present embodiment can be constituted by attaching the magnetic gear device 1 to the inner peripheral surface of the rotor magnets 221 in the radial direction R, and thus the magnetic gear device 1 can be easily retrofitted to the motor 2G.

The power transmission device 100G described above includes the magnetic gear device 1 and the motor 2G. However, the power transmission device 100G according to the present embodiment is not limited to such a configuration. For example, any one of the magnetic gear devices 1A, 1B, 1C, 1D, 1E, and 1F may be applied instead of the magnetic gear device 1.

### Third Embodiment

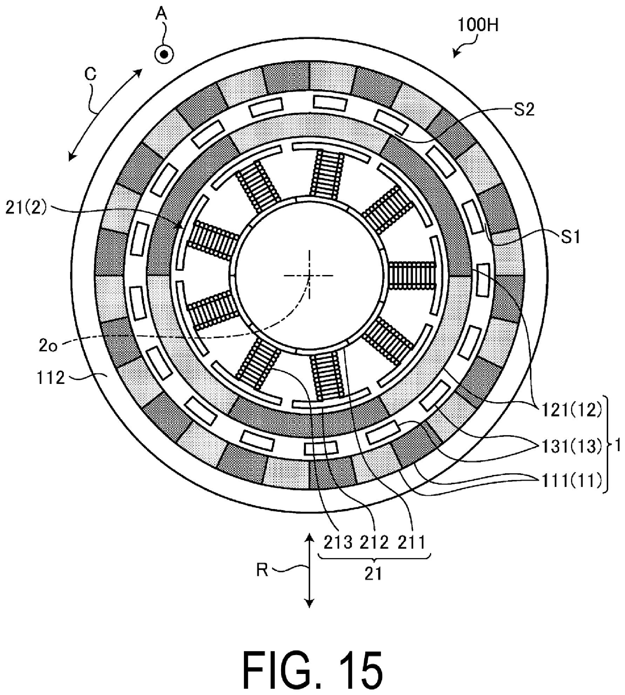

FIG. 15 is a plan view of a power transmission device 100H including a magnetic gear device 1 according to a third embodiment. Note that in the configuration of the power transmission device 100H according to the third embodiment, the same components as the components of the power transmission device 100 according to the first embodiment are denoted by the same reference numerals and the description of such components is omitted.

The power transmission device 100H includes, for example, a magnetic gear device 1 and a motor 2.

The motor 2 is an outer rotor type including the rotor 22 disposed at the outer side of the stator 21 in the radial direction R.

The second magnet 12 located at the inner side in the radial direction R is opposed to the stator 21 in the radial direction R, and also functions as a rotor magnet of the rotor 22 of the motor 2.

In the magnetic gear device 1, the second magnet 12 located at the inner side in the radial direction R is not provided with a second back yoke.

The power transmission device 100H according to the present embodiment has the same functions and effects as the power transmission device 100 according to the first embodiment.

In the power transmission device 100H according to the present embodiment, the second magnet 12 of the magnetic gear device 1 is opposed to the stator 21 in the radial direction R, and also functions as a rotor magnet of the rotor 22 of the motor 2. Therefore, it is not necessary to individually form the second magnet 12 and the rotor magnet, and therefore the number of components can be reduced, and the work efficiency during assembly can be improved.

The power transmission device 100H described above includes the magnetic gear device 1 and the motor 2. However, the power transmission device 100H according to the present embodiment is not limited to such a configuration. For example, any one of the magnetic gear devices 1A, 1B, 1C, 1D, 1E, and 1F may be applied instead of the magnetic gear device 1.

### Fourth Embodiment

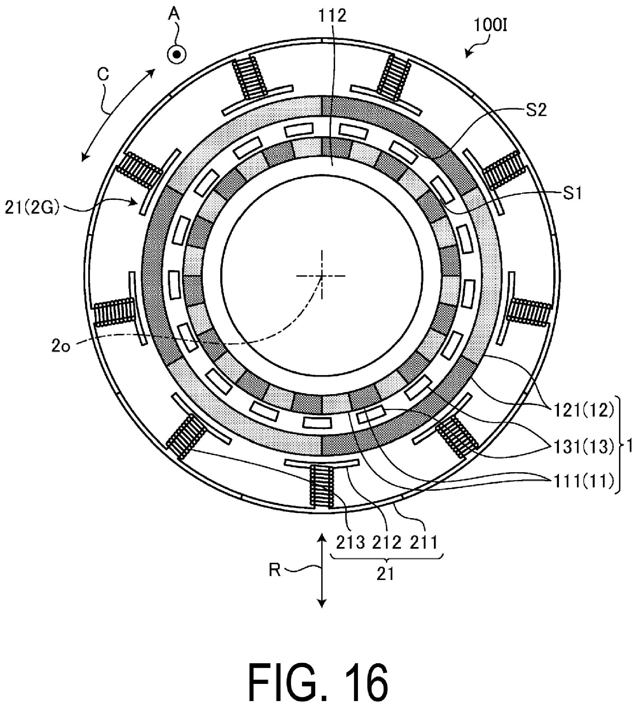

FIG. 16 is a plan view of a power transmission device 1001 including a magnetic gear device 1 according to a fourth embodiment. Note that in the configuration of the power transmission device 100I according to the fourth embodiment, the same components as the components of the power transmission device 100 according to the first embodiment and the same components as the components of the power transmission device 100G according to the second embodiment are denoted by the same reference numerals and the description of such components is omitted.

The power transmission device 100I includes, for example, a magnetic gear device 1 and a motor 2G.

The motor 2G is an inner rotor type including the rotor 22 disposed at the inner side of the stator 21 in the radial direction R.

In the magnetic gear device 1, the first magnet 11 is disposed at the inner side in the radial direction R, and the second magnet 12 is disposed at the outer side of the first magnet 11 in the radial direction R.

The second magnet 12 located at the outer side in the radial direction R is opposed to the stator 21 in the radial direction R, and also functions as a rotor magnet of the rotor 22 of the motor 2.

In the magnetic gear device 1, the second magnet 12 located at the outer side in the radial direction R is not provided with a second back yoke.

The power transmission device 1001 according to the present embodiment has the same functions and effects as the power transmission device 100 according to the first embodiment. Moreover, in the power transmission device 100I according to the present embodiment, the second magnet 12 of the magnetic gear device 1 is opposed to the stator 21 in the radial direction R, and also functions as a rotor magnet of the rotor 22 of the motor 2. Therefore, it is not necessary to individually form the second magnet 12 and the rotor magnet, and therefore the number of components can be reduced, and the work efficiency during assembly can be improved.

The power transmission device 100I described above includes the magnetic gear device 1 and the motor 2G. However, the power transmission device 1001 according to the present embodiment is not limited to such a configuration. For example, any one of the magnetic gear devices 1A, 1B, 1C, 1D, 1E, and 1F may be applied instead of the magnetic gear device 1.

### Fifth Embodiment

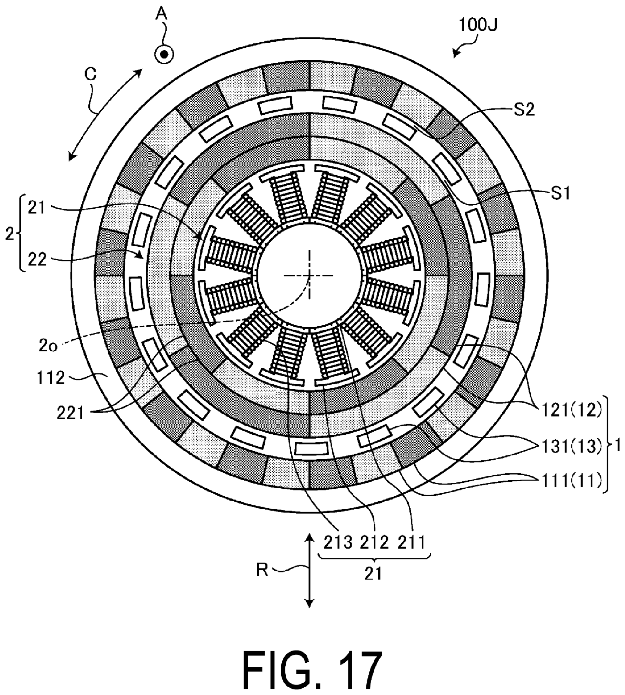

FIG. 17 is a plan view of a power transmission device 100J including a magnetic gear device 1 according to a fifth embodiment. Note that in the configuration of the power transmission device 100J according to the fifth embodiment, the same components as the components of the power transmission device 100 according to the first embodiment are denoted by the same reference numerals and the description of such components is omitted.

The power transmission device 100J includes, for example, a magnetic gear device 1 and a motor 2.

The motor 2 is an outer rotor type including the rotor 22 disposed at the outer side of the stator 21 in the radial direction R.

In the power transmission device 100J, the rotor magnets 221 and the second magnet 12 are integrally formed.

Thus, in the power transmission device 100J, the rotor magnets 221 and the second magnet 12 are coupled in the radial direction R, and the second magnet 12 rotates in the circumferential direction C together with the rotor magnets 221. When the rotor magnets 221 and the second magnet 12 are described more specifically, the rotor magnets 221 are formed at the inner side in the radial direction R and the second magnet 12 is formed at the outer side in the radial direction R using a ring-shaped magnetic body, by magnetizing the magnetic body as described above. In the present embodiment, the number of the rotor magnets 221 and the number of the second magnets 12 are different from each other, but may be the same.

In the magnetic gear device 1, the second magnet 12 located at the inner side in the radial direction R is not provided with a second back yoke.

The power transmission device 100J according to the present embodiment has the same functions and effects as the power transmission device 100 according to the first embodiment. Moreover, in the power transmission device 100J according to the present embodiment, the rotor magnets 221 and the second magnet 12 are integrally formed, and therefore the work efficiency during assembly can be improved.

The power transmission device 100J described above includes the magnetic gear device 1 and the motor 2. However, the power transmission device 100J according to the present embodiment is not limited to such a configuration. For example, any one of the magnetic gear devices 1A, 1B, 1C, 1D, 1E, and 1F may be applied instead of the magnetic gear device 1.

### Sixth Embodiment

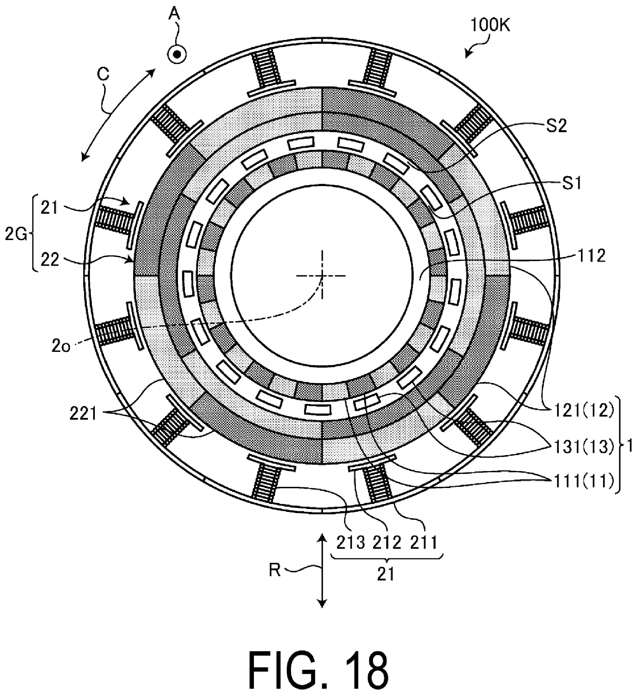

FIG. 18 is a plan view of a power transmission device 100K including a magnetic gear device 1 according to a sixth embodiment. Note that in the configuration of the power transmission device 100K according to the sixth embodiment, the same components as the components of the power transmission device 100 according to the first embodiment and the same components as the components of the power transmission device 100G according to the second embodiment are denoted by the same reference numerals and the description of such components is omitted.

The power transmission device 100K includes, for example, a magnetic gear device 1 and a motor 2G.

The motor 2G is an inner rotor type including the rotor 22 disposed at the inner side of the stator 21 in the radial direction R.

In the power transmission device 100K, the rotor magnets 221 and the second magnet 12 are integrally formed.

Thus, in the power transmission device 100K, the rotor magnets 221 and the second magnet 12 are coupled in the radial direction R, and the second magnet 12 rotates in the circumferential direction C together with the rotor magnets 221. When the rotor magnets 221 and the second magnet 12 are described more specifically, the rotor magnets 221 are formed at the inner side in the radial direction R and the second magnet 12 is formed at the outer side in the radial direction R using a ring-shaped magnetic body, by magnetizing the magnetic body as described above. In the present embodiment, the number of the rotor magnets 221 and the number of the second magnets 12 are different from each other, but may be the same.

In the magnetic gear device 1, the second magnet 12 located at the inner side in the radial direction R is not provided with a second back yoke.

The power transmission device 100K according to the present embodiment has the same functions and effects as the power transmission device 100 according to the first embodiment. Moreover, in the power transmission device 100K according to the present embodiment, the rotor magnets 221 and the second magnet 12 are integrally formed, and therefore the work efficiency during assembly can be improved.

The power transmission device 100K described above includes the magnetic gear device 1 and the motor 2G. However, the power transmission device 100K according to the present embodiment is not limited to such a configuration. For example, any one of the magnetic gear devices 1A, 1B, 1C, 1D, 1E, and 1F may be applied instead of the magnetic gear device 1.

Although the description has been given based on the embodiments and the modified examples of the power transmission devices 100, 100A, 100C, 100D, 100E, 100F, 100G, 100H, 1001, 100J, and 100K according to the present invention, the present invention is not limited to the embodiments and the modified examples, and it goes without saying that various modifications can be made without departing from the gist of the present invention. Configurations obtained by appropriately combining the constituent elements of each embodiment described above and the constituent elements of each modified example described above are also included in the present invention. Various modifications not deviating from the gist of the present invention are also included within the technical scope of the present invention, and this will be clear to those skilled in the art from the description of the claims.

### Reference Signs List

1, 1A, 1B, 1C, 1D, 1E, 1F Magnetic gear device (harmonic type magnetic gear device), 11 First magnet, 111 First magnetic pole, 12 Second magnet, 121 Second magnetic pole, 13 First pole piece, 14 Third magnet, 141 Third magnetic pole, 15 Fourth magnet, 151 Fourth magnetic pole, 16 Second pole piece, 100, 100A, 100C, 100D, 100E, 100F, 100G, 100H, 100I, 100J, 100K Power transmission device, A Axial direction, C Circumferential direction, R Radial direction

## Claims

1. A power transmission device comprising:
a motor including a stator and a rotor provided to be rotatable with respect to the stator; and
a magnetic gear device with a driving force of the motor being directly transmitted to the magnetic gear device, wherein
the magnetic gear device includes at least
a first magnet including a plurality of first magnetic poles disposed in a circumferential direction,
a second magnet including a plurality of second magnetic poles disposed in the circumferential direction, and
a pole piece located between the first magnet and the second magnet and magnetically coupling the first magnet and the second magnet,
at least one of the first magnet and the second magnet has a ring shape, and
the magnetic gear device is a harmonic type magnetic gear device.

2. The power transmission device according to claim 1, wherein
the rotor includes a plurality of rotor magnets, and the plurality of rotor magnets are disposed along the circumferential direction, and
the rotor magnets and one of the first magnet or the second magnet are disposed to be opposed to each other in a radial direction.

3. The power transmission device according to claim 1, wherein
one of the first magnet or the second magnet is opposed to the stator in a radial direction, and also functions as a rotor magnet of the rotor of the motor.

4. The power transmission device according to claim 2, wherein
the rotor magnets and the one of the first magnet or the second magnet opposed to the rotor magnets in the radial direction are separately formed.

5. The power transmission device according to claim 2, wherein
the rotor magnets and the one of the first magnet or the second magnet opposed to the rotor magnets in the radial direction are integrally formed.
